(19) Europäisches Patentamt
European Patent Office
Office européen des brevets

(11) EP 4 342 671 A2

(12) EUROPEAN PATENT APPLICATION

(43) Date of publication:
27.03.2024 Bulletin 2024/13

(51) International Patent Classification (IPC):
**B33Y 30/00** (2015.01)

(21) Application number: 23214112.7

(22) Date of filing: 24.01.2020

(52) Cooperative Patent Classification (CPC):
**B29C 64/282; B29C 64/124; B29C 64/236;
B33Y 10/00; B33Y 30/00;** B29C 64/386;
B33Y 50/00

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 24.01.2019 US 201962796545 P

(62) Document number(s) of the earlier application(s) in
accordance with Art. 76 EPC:
**20744505.7 / 3 914 437**

(71) Applicants:
• **Voit, Walter
Dallas TX 75252 (US)**
• **Lund, Benjamin, R.
Dallas, TX 75252 (US)**
• **Lund, Caleb
Dallas TX 75252 (US)**
• **Kay, Stephen
Dallas, TX 75252 (US)**
• **Parker, Eric
Dallas, TX 75252 (US)**
• **Zamorano, Daniel
Dallas TX 75252 (US)**

(72) Inventors:
• **Voit, Walter
Dallas TX 75252 (US)**
• **Lund, Benjamin, R.
Dallas, TX 75252 (US)**
• **Lund, Caleb
Dallas, TX 75252 (US)**
• **Kay, Stephen
Dallas, TX 75252 (US)**
• **Parker, Eric
Dallas, TX 75252 (US)**
• **Zamorano, Daniel
Dallas TX 75252 (US)**

(74) Representative: **Finnegan Europe LLP
1 London Bridge
London SE1 9BG (GB)**

Remarks:
This application was filed on 04-12-2023 as a
divisional application to the application mentioned
under INID code 62.

(54) **SYSTEM FOR ADDITIVE MANUFACTURING**

(57) A system for producing a three-dimensional object from a fluid medium includes image processing units. The fluid medium is configured to solidify when subjected to a prescribed light stimulation. Each image processing unit includes at least one light emitting source configured to emit light, and at least one mirror system configured to reflect the light emitted by the light emitting source. The mirror system includes a manipulating system for adjusting the direction of the emitted light, a control system for controlling the manipulating system, and at least one optical element configured to manipulate the emitted light and to project the emitted light onto an area of a surface of the fluid medium to form an image on the surface. The image processing units are configured to form corresponding images on the surface, and are configured to be movable at least in a lateral direction relative to the surface.

FIG. 1A

**Description**

## CROSS REFERENCE TO RELATED APPLICATIONS

This application claims the benefit of U.S. Provisional Application No. 62/796,545, filed January 24, 2019, which is incorporated herein by reference in its entirety.

## TECHNICAL FIELD

The present invention relates to systems, methods, and materials for ultra-high throughput additive manufacturing.

## BACKGROUND

Laser-based stereolithography (SLA) and digital light processing (DLP) 3D printing processes have been methods of choice for additive manufacturing for the last 20 years. Both SLA and DLP printers convert photoreactive liquid resins into solid parts, layer-by-layer, by selectively exposing the resin to a light source. The two processes differ in how the resin is exposed to light. SLA draws each layer using a laser beam. DLP printers, on the other hand, use a digital projection screen to flash a flat image of each layer at once. The image of each layer is composed of square pixels, resulting in a layer formed from small rectangular bricks called voxels. These existing 3D printing techniques have been successfully used for prototyping applications. However, various limitations have prevented their use for high volume manufacturing applications.

SLA prints maintain a good resolution and surface finish even as build volume increases. However, the manufacturing time becomes prohibitively long with larger build volumes because each layer must be drawn out. In order to increase manufacturing speed, SLA resins have been adjusted to optimize their print speed, but this has led to undesirable materials characteristics. SLA print materials are often weak and brittle. Therefore, due to slow print times and poor materials properties, SLA systems have been relegated to printing prototypes rather than production parts.

DLP printing can achieve faster print times because an entire layer of resin may be exposed to projected light, but there are tradeoffs in a print size, resolution and surface finish. To print larger size parts using DLP, image size from a projector needs to be increased, which may be achieved using magnification optics. However, because currently available DLP printing systems typically utilize a single-chip projector having a fixed number of pixels, increasing image size increases pixel size, leading to coarser resolution prints. Therefore, DLP systems have generally been confined to an effective manufacturing area of less than 11 inches by 7 inches. Using a traditional DLP system for a larger manufacturing area results in feature size of about 200 micrometers ($\mu$m).

Although improvements in chip technology have increased the number of pixels in the projected image, improvements are insufficient to meet manufacturing needs. Alternative efforts have also been made to increase the manufacturing area by stitching together multiple images, but the nature of how the DLP chips are manufactured and the tolerances involved make the stitching of the images virtually impossible.

## SUMMARY

Consistent with a disclosed embodiment a system for producing a three-dimensional object from a fluid medium configured to solidify when subjected to prescribed light stimulation is provided. The system may include a plurality of image processing units. Each image processing unit may include at least one light emitting source configured to emit light, at least one mirror system for reflecting light emitted by the at least one light emitting source, wherein the at least one mirror system comprises a manipulating system for adjusting a direction of the emitted light and a control system for controlling the manipulating system, and at least one optical element configured to manipulate the emitted light and to project the emitted light onto an area of a surface of the fluid medium to form an image on the surface. The image processing units may be configured to form a corresponding plurality of images on the surface, and may be configured to be movable at least in a lateral direction relative to the surface.

The foregoing general description and the following detailed description are exemplary and explanatory only and are not restrictive of the claims.

## BRIEF DESCRIPTION OF THE DRAWINGS

The accompanying drawings are not necessarily to scale or exhaustive. Instead, the emphasis is generally placed upon illustrating the principles of the embodiments described herein. These drawings, which are incorporated in and constitute a part of this specification, illustrate several embodiments consistent with the disclosure and, together with the detailed description, serve to explain the principles of the disclosure. In the drawings:

Fig. 1A is an example of a scanning and projection system for three-dimensional printing consistent with disclosed embodiments.

Figs. 1B and 1C show other exampled of scanning and projection systems for three-dimensional printing consistent with disclosed embodiments.

Fig. 1D shows an exemplary scanning table consistent with disclosed embodiments.

Fig. 1E provides another example of a scanning table consistent with disclosed embodiments.

Fig. 1F shows an example of an image processing unit consistent with disclosed embodiments.

Fig. 1G shows optical elements and light sources that can be used for exposing a region to radiation consistent with disclosed embodiments.

Figs. 1H and 1I show an example intensity distribution for images projected by image processing units consistent with disclosed embodiments.

Fig. 1J shows examples of image shapes projected by image processing units consistent with disclosed embodiments.

Fig. 1K shows examples of mirror systems consistent with disclosed embodiments.

Fig. 2A shows multiple image processing units mounted on a scanning table consistent with disclosed embodiments.

Fig. 2B shows multiple image processing units and resulting projected images consistent with disclosed embodiments.

Fig. 2C shows examples of overlaps of projected images when image processing units are moving consistent with disclosed embodiments.

Fig. 3A shows example images over an area requiring irradiation consistent with disclosed embodiments.

Fig. 3B shows the location of a cross-sectional plane relative to a three-dimensional object consistent with disclosed embodiments.

Fig. 3C shows an example of a luminous energy dose distribution over a design area with dark regions characterized by a larger dose consistent with disclosed embodiments.

Fig. 4 shows an example domain for receiving irradiation and an example exposure region in proximity of the boundary of the domain consistent with disclosed embodiments.

Fig. 5 represents an example process of exposing a region to radiation consistent with disclosed embodiments.

Fig. 6A represents an example process of rotating mirrors to result in images that are aligned with boundaries of an area requiring irradiation consistent with disclosed embodiments.

Fig. 6B represents an example process of irradiating a patch of a surface with a time-varying intensity of light for different wavelengths of light consistent with disclosed embodiments.

Fig. 7 shows an example of a partitioning of a three-dimensional geometry into parts of different complexity consistent with disclosed embodiments.

Figs. 8A and 8B represent example processes for irradiating voxels of resin consistent with disclosed embodiments.

Fig. 9 represents an example process for selecting or optimizing parameters for a three-dimensional printing consistent with disclosed embodiments.

Fig. 10 represents an example process for fabricating a large three-dimensional object using multiple three-dimensional systems consistent with disclosed embodiments.

Fig. 11 shows the use of multiple resins for printing a three-dimensional object consistent with disclosed embodiments.

Fig. 12 shows an example step function and an example intensity distribution consistent with disclosed embodiments.

## DESCRIPTION

An additive manufacturing system, methods, and materials are described. The system is capable of high-volume manufacturing and can produce high-resolution parts at fast manufacturing speeds, without certain tradeoffs in size and speed.

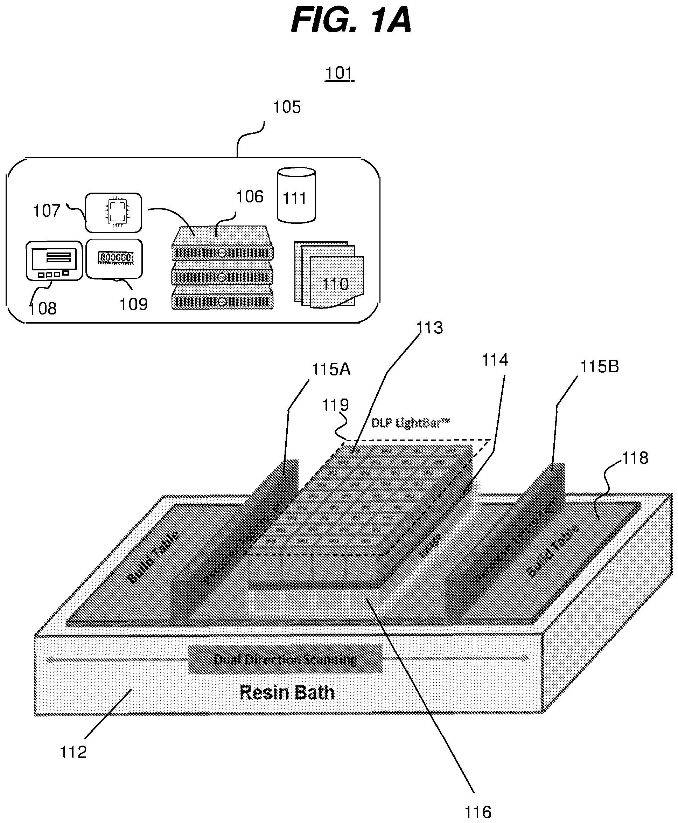

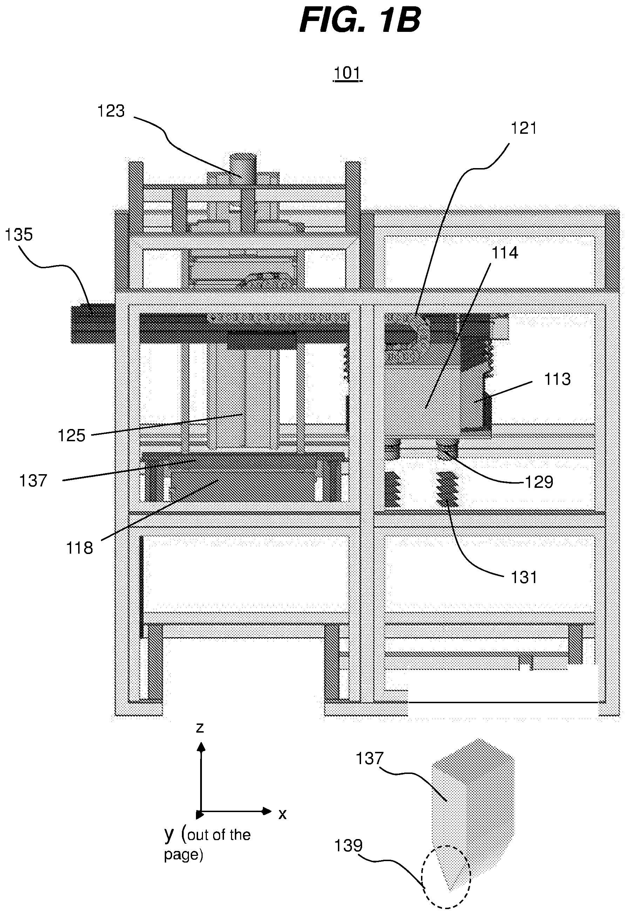

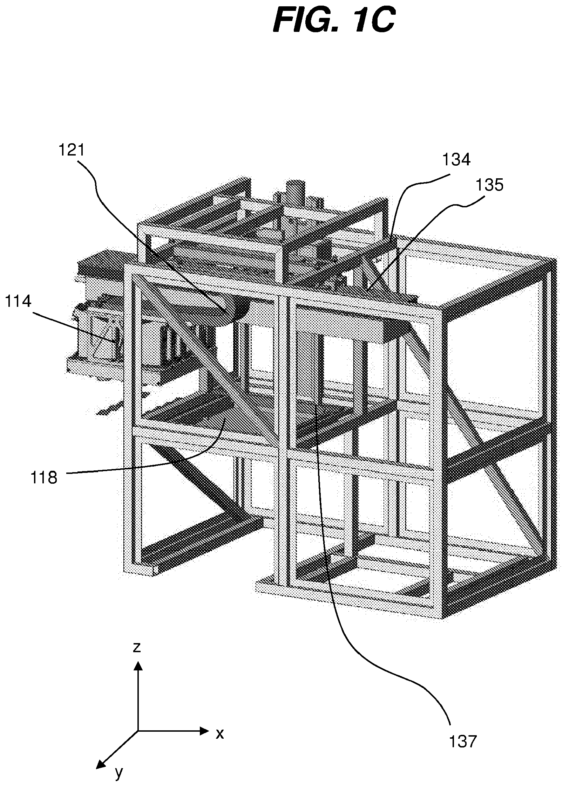

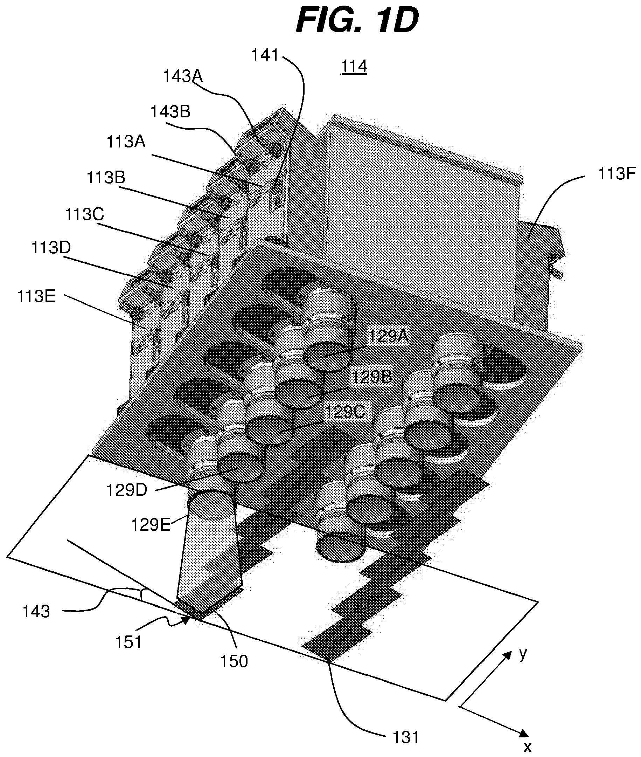

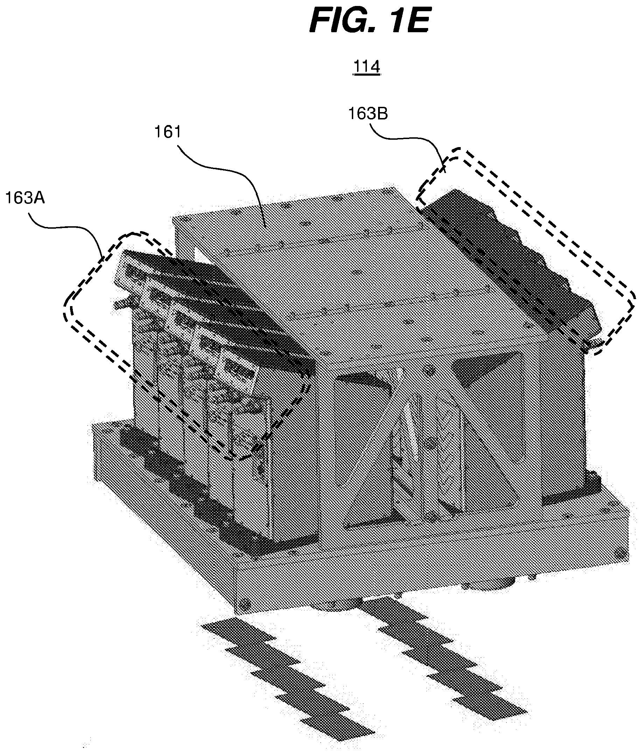

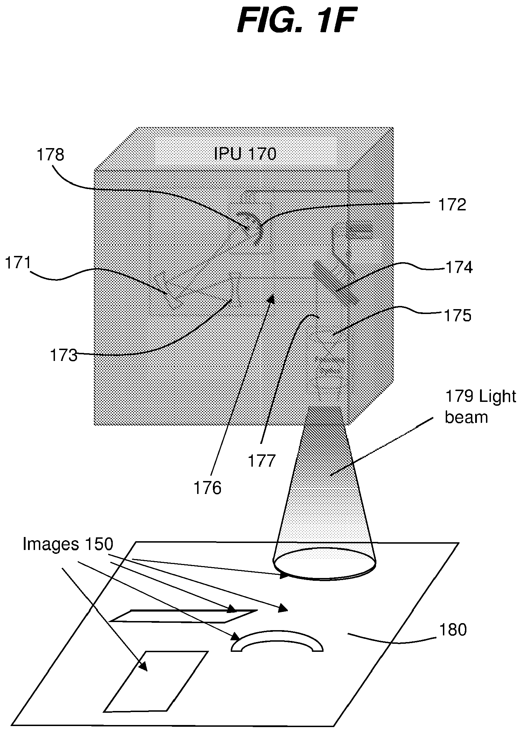

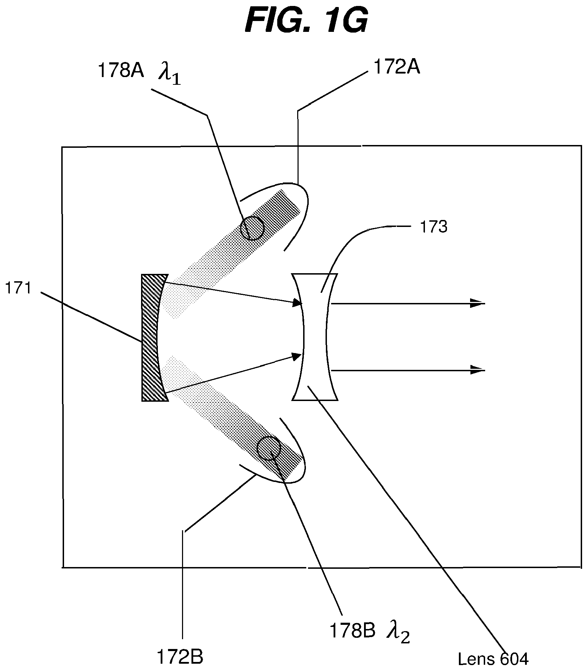

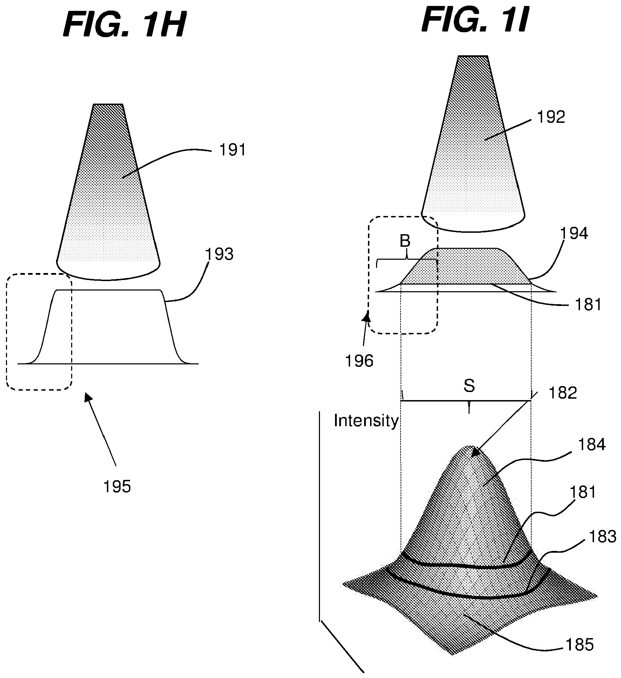

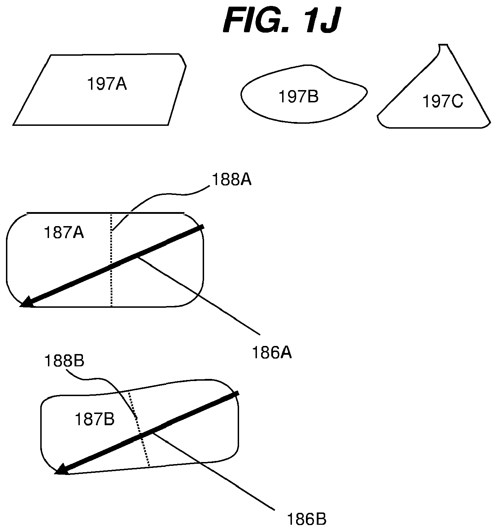

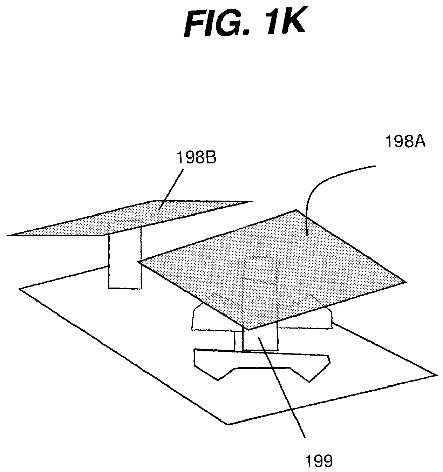

Reference will now be made in detail to exemplary embodiments shown in Figs 1-11. Unless otherwise defined, technical and/or scientific terms have the meaning commonly understood by one of ordinary skill in the art. The disclosed embodiments are described in sufficient detail to enable those skilled in the art to practice the disclosed embodiments. It is to be understood that other embodiments may be utilized and that changes may be made without departing from the scope of the disclosed embodiments. Thus, the materials, methods, and examples are illustrative only and are not intended to be necessarily limiting.

Fig. 1A illustrates an example embodiment of system 101 for producing a three-dimensional object from a fluid medium capable of solidification when subjected to prescribed light simulation. System 101 may combine the advantages of stereolithography (SLA) and digital light processing (DLP) three-dimensional (3D) printing. System 101 incorporates an arrayed set of image processing units (IPUs) combined with an advanced scanning table, a build table, and a fluid handling and recoater system to produce the polymer-based 3D printed objects.

As shown in Fig. 1A, system 101 includes a build table 118 positioned within a vat 112. Vat 112 is configured to contain a fluid medium (e.g., a photo-curable resin). The photo-curable resin (also referred to as a polymerizable liquid) may include any suitable flowable resin that solidifies when exposed to a prescribed light. For example, the photo-curable resin may include a thiol-acrylate photopolymerizable resin. In some cases, the resin may comprise a thiol, at least one difunctional monomer, at least one monofunctional monomer, and a thiol. The difunctional monomer may comprise at least one of poly(ethylene glycol) diacrylate, CN9782, CN9167, CN9004, bisacrylamide, tricycle [5.2.1.0.2,6] decanedimethanol diacrylate. The monofunctional monomer may include at least one of 2-ethylhexyl acrylate, hydroxypropyl acrylate, cyclic trimethylolpropane formal acrylate, isobornyl acrylate, butyl acrylate, N, N-Dimethylacrylamide, or 2-hydroxyethyl methacrylate. The resin may further include a trifunctional monomer such as trimethylolpropane triacrylate. The thiol may include at least one secondary thiol, such as Pentaerythritol tetrakis (3-mercaptobutylate); 1,4-bis (3-mercaptobutylyloxy) butane; 1,3,5-Tris(3-melcaptobutyloxethyl)-1,3,5-triazine. The resin may also include at least one of poly(ethylene glycol), polybutadiene, polydimethylsiloxane acrylate copolymer, poly(styrene-co-maleic anhydride).

The resin may include a sealed isocyanate photopolymerizable resin. For example, the resin may comprise a blocked isocyanate and a multifunctional nucleophile, or a blocked isocyanate and a mixture of one or more monomers. Blocking agents include, for example, dimer isocyanates, trimer isocyanates, derivatives of alcohols, hindered amines, caprolactams, phenols, oximes, pyrazoles malonates. Isocyanate includes, for example, HDI, IDI, MDI, HMDI, or TDI. Blocked isocyanates include, for example, uretdione, biuret, allophphanates, or isocyanaurates.

The resin optionally may comprise at least one of an initiator, an inhibitor, a dye, or a filler. The initiator may include at least one of Phenylbis(2,4,6-trimethylbenzoyl)phosphine oxide, Diphenyl(2,4,6-trimethylbenzoyl)phosphine oxide, Bis-acylphosphine oxide, Diphenyl(2,4,6-trimethylbenzoyl)phosphine oxide, 2,2'-Dimethoxy-2-phenylacetophenone. The inhibitor may include at least one of Hydroquinone, 2-methoxyhydroquinone, Butylated hydroxytoluene, Diallyl Thiourea, Diallyl Bisphenol A. The dye may include at least one of 2,5-Bis(5-tert-butyl-benzoxazol-2-yl)thiophene, Carbon Black, Disperse Red 1. The filler may include at least one of titanium dioxide, silica, calcium carbonate, clay, aluminosilicates, crystalline molecules, crystalline or semi-crystalline oligomers, polymers between about 1000 Da and about 20000 Da molecular weight. At or above room temperature, the resin may have a viscosity of less than about 1000 centipoise, less than about 750 centipoises, less than about 500 centipoises, less than about 250 centipoises, or less than about 100 centipoises. Alternatively, the resin may have a viscosity of less than about 100 centipoises, 500 centipoises, or 1000 centipoise measured at one or more temperatures between 0°C and 80°C.

Fig. 1A also shows a plurality of image processing units (IPUs) 119 mounted on a scanning table 114, which is positioned over a build table 118. An individual IPU from IPUs 119 is referred to as IPU 113, as shown in Fig. 1A. IPU 113 may include one or more DLP chips. DLP chips may include various optics components (e.g., lenses, mirrors, prisms, and the like) as well as light emitting sources. IPU 113 may be designed as a stand-alone unit, and multiple IPU 113 may be combined to enable the scalability of the system and to provide a level of redundancy to the system that may maximize the uptime and enable controlled maintenance of the tool. By arraying the IPU's 119, as shown in Fig. 1A, system 101 may control the amount of magnification required for projecting an image of a cross-section of a 3D object onto a surface of the resin. Control of magnification may be used to improve both the resolution and surface quality of the 3D object being printed. The improvement in the resolution may also enable new capabilities such as printing micro-truss or lattice structures. These capabilities may enable the next generation of structural support for new products and may allow for weight reduction of these products and for targeted energy dampening (e.g., in apparel such as sneakers) properties. System 101 may enable 3D printing at a reduced cost in markets such as apparel, automotive, and aerospace.

In various embodiments, IPU 113 may include a light source with the light irradiated onto a design area (an area over a surface of the fluid medium that requires light exposure). In various embodiments, the light source may include a deep ultraviolet (UV) light emitting diode (LED), a UV LED, a near UV LED, a blue LED, a xenon lamp with a wavelength filter, and/or the like. An example LED may be configured to emit light in a wavelength range of 210 to 500 nanometers (nm). In some cases, LED may emit light at 355nm, 370nm, 380nm, 385nm, 390nm, 400nm, 405nm, and the like. After receiving an adequate dose of radiation (defined here as a luminous energy dose, or a threshold dose), the film or resin (also referred to as a layer of resin) with a prescribed thickness solidifies (cures). The thickness of the solidified film is dependent on a wavelength of irradiation, an intensity, and duration of the irradiation, a type of resin, and a presence of light-absorbing additive in the resin. These parameters may be controlled during the printing of a three-dimensional object. In some embodiments, these parameters may be varied as a function of time, and in some cases, these parameters may be varied laterally relative to the surface of the fluid medium.

An example DLP chip of IPU 113 is shown in Fig. 1K and may include a plurality of mirror systems (e.g., 198A and 198B) for reflecting the emitted light. An example mirror system may include a manipulating system for adjusting a direction of the emitted light. The mirror system may also include a control system for controlling the manipulating system. In an example embodiment, the manipulating system may include a digital micromirror device or any suitable micro-opto-electro-mechanical (MOEM) elements designed to adjust the direction of the emitted light by rotating an example mirror of the mirror system (e.g., change the direction of a normal vector drawn to the surface of the mirror). These changes may be characterized as a pitch and roll movements of the mirror. In addition, the mirror may rotate around the axis that is parallel to the normal vector of the mirror surface (yaw movement of the mirror). The manipulating system may be similar to the micro-electromechanical mirror system used for digital light processing. In an example embodiment, a MOEM element may include a yoke 199, as shown in Fig. 1K, connected to two support posts by compliant torsion hinges. The yoke may enable a mirror rotation and/or tilting either toward the light source (ON) or away from the light source (OFF). The mirrors mounted on MOEM elements may be rotated/tilted at a prescribed frequency (e.g., as often as 5,000 times per second) to create a desired output intensity of light. The control system may include a processor and a plurality of electrical connections to the MOEM elements of the manipulating system. Electrical connections may control the position of yoke via electrostatic attraction.

In various embodiments, light emitted by the mirrors may be further directed onto an area of a surface using a suitable one or more optical elements (e.g., elements 171, 173, and 175, as shown in Fig. 1F). Optical elements may include lenses, prisms, waveguides, diffraction gratings, apertures of various shape and sizes, a graded index of refraction lenses, mirrors, parabolic reflectors (e.g., reflector 178, as shown in Fig. 1F), total internal reflection lenses, movable lenses, shape deforming lenses, optical elements containing fluid, wavelength filters, wavelength selective absorbers, and the like. In an example embodiment, the selected shape of the aperture may be any suitable geometrical shape (e.g., a rectangle, an ellipse, a circle, a triangle, and the like). The optical elements may be configured to focus or diffuse the light over an area of a surface resulting in a desired irradiation of the area. The illuminated area (also referred to as an image or a patch of light).

In an example embodiment, an illuminated area from at least one IPU may be configured to overlap with an image of at least another IPU. The overlap area may be adjusted by manipulating mirrors (as well as optical elements) of image processing units. In some cases, several images from multiple image processing units may be configured to overlap. Additionally, or alternatively, images from different mirrors of the same IPU may overlap. For example, if a few mirrors of an IPU fail, other mirrors of the same IPU may be used to illuminate a given area. For example, if one of the mirrors fails, system 101 may be configured to use other mirrors to appropriately cover the area requiring illumination. In an example embodiment, system 101 may be configured to function when one percent of mirrors of a DLP fail, when a few percent of the mirrors fail, when five, ten, fifteen, twenty, thirty, forty, fifty percent of mirrors fail, or when even more mirrors fail.

Overlap of images from different IPUs may provide redundancy for system 101. For example, if some of the IPUs fails, system 101 may be configured to use other IPUs to appropriately cover the area requiring illumination. In an example embodiment, system 101 may be configured to function when one percent of IPUs fail, when a few percent of IPUs fail, when five percent of IPUs fail, when ten percent of IPUs fail, when fifteen percent of IPUs fail, or when even more IPUs fail. In some cases, system 101 may operate with significant IPUs failing by increasing the time required for 3D printing. For example, if fifty percent of IPUs fail, system 101 may be required to double the time required to expose a surface area to the illuminated light. Alternatively, system 101 may be configured to adjust the brightness, wavelength, or any other suitable illumination parameters (e.g., distribution of light over the surface, focusing of light, and the like) for the light of IPUs to account for failed IPUs.

Fig. 1A shows a scanning table 114 configured to move with respect to a build table 118. For example, scanning table 114 may be moved using motors (e.g., linear motors). In various embodiments, scanning table 114 may be configured to have high positional accuracy. For example, scanning table 114 may have a positional accuracy from pass to pass having an error of less than a few microns. The positional accuracy may be achieved using precise electrical motors. Such positional accuracy may provide a required positional alignment from pass to pass. Scanning table 114 may be configured to move at any suitable rate while maintaining positional accuracy. For example, table 114 may be configured to move at a rate of one micron per second to one meter per second. The rate of motion of table 114 may depend on attributes of a 3D object to be printed (e.g., the rate of motion may depend on the complexity of 3D object).

In various embodiments, the speed of 3D printing may not be constrained by the size of the exposure area since it is possible to expand the number of IPU's arrayed across the exposure area based on the size of the parts to be printed. This allows system 101 to be scalable and modular. For example, when a large part is to be printed, scanning table 114 may be enlarged by incorporating more IPUs 119. Various parameters for controlling 3D printing include the speed of scanning table 114, the intensity of radiation, radiational wavelengths, as well as the number and type of IPUs used.

System 101 may be configured for dual directional scanning. System 101 may include an arrayed set of DLP chips located within an individual IPU, with IPUs 119 moved to scan the polymer surface. As scanning table 114 of system 101 is moving, images may be projected from arrayed IPU's 113. Because the DLP chips are capable of transmitting an image at a high rate of speed (23 kHz binary / 1.7 kHz 8-bit greyscale) and because system 101 has multiple IPU's, system 101 may be capable of exposing individual layers at between one and ten seconds per layer.

Fig. 1A also shows that system 101 may include a computer system 105 for controlling various aspects of 3D printing such as a position of scanning table 114, orientation of mirrors and lenses of various IPUs 119, speed of scanning table 114, vertical position of build table 118, and the like. Computer system 105 may include one or more processors 107, a memory 109 for storing instructions 110, and an interface 108 for inputting/receiving various parameters and instructions for system 105. In various embodiments, computing system 105 may have a database 111 for storing any suitable information related to the 3D printing process. For example, database 111 may store computer-aided design (CAD) files representing the geometry of a 3D object.

Fig. 1B shows an example embodiment of system 101 with scanning table 114 configured to move laterally (e.g., in an x direction) along a rail 135. Scanning table 114 may be connected to rail 135 using wheels, bearings, or any other suitable means (e.g., using a magnetic levitation) and may be guided along rail 135 using motors (e.g., electrical linear motors, and the like). Rail 135 may be configured to be stationary or move laterally (e.g., in a y direction). For example, Fig. 1C shows rail 135 attached to a rail 134 and configured to slide along rail 134 in the y direction. In various embodiments, scanning table 114 may be movable in a lateral direction relative to the surface by at least a predetermined lateral distance step. In some cases, the predetermined step may be a few microns, a few millimeters, a few centimeters, and the like. In some cases, a ratio of the lateral distance step to an average size of images projected by IPUs 119 may be an irrational number or any suitable predetermined value (e.g., 0.1, 0.2, 0.5, 1, 5, 10, 20, and the like). A size of the image may be determined using any appropriate measure such as a square root of the image area, a length of a boundary of the image, a maximum dimension of the image and the like.

Fig. 1B shows scanning table 114 with IPU 113 units, with scanning table 114 connected to an umbilical cord 121 (e.g., one or more electrical wires) configured to provide electrical power and/or data to various components of table 114. In various cases, cord 121 is configured to be movable and bendable to allow motion of table 114. Umbilical cord 121 is only one possible way of transferring power and data to table 114, and any other suitable way may be used (e.g., a conductor rail, a magnetic induction, a wireless transmission, and the like). Scanning table 114 may include a lens assembly 129, as shown in Fig. 1B positioned to focus light onto a surface of a resin requiring curing. Fig. 1B shows example regions 131 that may be irradiated by light from IPU 113 passing through an example lens assembly 129. In various embodiments, lens assembly 129 may include multiple lenses (e.g., convex lenses, concave lenses, lenses with graded refraction index, and the like). Lens assembly 129 may be configured to allow relative motion of lenses within assembly 129 resulting in control of light intensity over an irradiated area (e.g., the motion of lenses may allow focusing light within a region of an irradiated area or diffusing the light over the irradiated area). Scanning table 114 may be configured to mount IPUs for irradiation of a region of a resin layer. At the start of the 3D printing process, the resin layer may be deposited over a build table 118, as shown in Fig. 1B, and during the 3D printing process, the resin layer may be deposited over a top portion of a 3D object (the top portion being a cross-sectional area of a 3D object), with the 3D object residing onto build table 118. In various embodiments, the resin may be deposited using any suitable means. For example, the resin may be allowed to flow over table 118 and the top surface of the 3D object when table 118 is dipped into a vat containing the resin by a certain amount. The depth at which table 118 is dipped into the vat may determine the thickness of a layer of the resin. As the 3D object is being built, build table 118 is configured to move downwards (in -z direction, as shown in Fig. 1B) such that the distance between the topmost portion of the 3D model and the scanning table 114 remains constant. In an example embodiment, build table 118 may be moved downward using a rail 125, as shown in Fig. 1B and motor 123 configured to allow table 118 to move along rail 125. In an example embodiment, motor 123 may be any suitable motor (e.g., electric motor). Motor 123 may include multiple transmission gears to allow for a precise motion of build table 118.

The system 101 may also include a recoater device. The recoater device serves to ensure that the surface of the resin layer is flat before exposure to light. An uneven resin surface can lead to reduced geometric fidelity of the 3D object or coating produced by the additive manufacturing method. The recoater device may be used to recoat a topmost cross-sectional area of a 3D model with a layer of resin. Example recoaters 115A and 115B are shown in Fig. 1A and recoater 137 is shown in Figs. 1B and 1C. Recoater 137 may include a blade configured to provide a layer of resin with a controlled thickness over the topmost cross-sectional area of the 3D model. In some cases, recoater 137 may include more than one blade. A blade of recoater 137 may be configured to move in a vertical and lateral direction with respect to the build table. For example, after depositing resin on the build table, the blade may move down to engage with the surface of the resin layer. A surface of the blade may have a plurality of bristles. The end of a bristle may have a triangular cross-section as indicated by region 139, as shown in Fig. 1B. In some cases, a surface of the blade may have microneedles. In various embodiments, the blade is configured to remove a fluid medium before fluid medium solidifies in order to smooth liquid resin.

In an example embodiment, a 3D object may be first coated with a layer of resin (e.g., the 3D object may be submerged into a vat containing resin and then elevated to a point just below the surface of the resin corresponding to the layer thickness to be exposed). Subsequently, the layer of resin formed over the 3D model may be smoothed and/or thinned using recoater 137. For example, recoater 137 may move horizontally over the surface of the resin above the 3D object such that the lower edge of recoater 137 may remove excess of resin from the top surface and thereby may smooth the upper surface of the resin layer and provide for a selected thickness of the resin layer. For example, the thickness of the resin layer may be controlled by controlling a distance between recoater 137 and the upper surface of the 3D object. The distance between an upper surface of the 3D object and recoater edge 137 may be determined using any suitable means (e.g., using a micrometer, triangulation technique using cameras and/or lasers, and the like). Recoater 137 may be moved at a desired suitable speed and may complete one or more passes to provide a smooth layer of resin. Additionally, or alternatively, recoater 137 may move laterally in advance of the moving scanning table. In an example embodiment, each pass of recoater 137 may be completed at a desired suitable speed (which may be different from one pass to another). Example speeds for recoater 137 may range from about one millimeter to few tens of centimeters per second.

In some cases, recoater 137 may pass several times over the surface of a 3D object to smooth the layer of the resin. I an example embodiment, a first pass of recoater 137 may be done at a first speed and a second pass of the recoater 137 may be done at a second speed that is faster (or slower) than the first speed. In some cases, the second speed may be faster than the first speed by 10%, 20%, 50%, 100%, 200%, 1000% and the like. In some embodiments, the first pass of recoater 137 may be at a first distance above the surface of the 3D object and a second pass of recoater 137 may be at a second distance above the surface of the 3D object. For example, the second distance may be smaller than the first distance (e.g., the second distance may be 99%, 95%, 90%, 80%, and the like of the first distance). In some cases, recoater 137 may include a delay between passes. For example, the delay between a first and a second recoating pass may allow variations in the resin surface to smooth out prior to the second recoating pass. The delay time may be proportional to viscosity characteristics of the resin and other parameters of the resin (e.g., the surface tension of resin, density of resin, and the like). In some cases, recoater 137 may exert pressure on a surface of the layer of resin. Additionally, or alternatively, recoater 137 may include a mechanism for inducing vibration on the layer of resin for facilitating a smoothing of the layer of resin. In various cases, after recoater 137 smooths the layer of resin, the layer may be illuminated by IPUs 119, as shown in Fig. 1A.

Fig. 1D shows an example embodiment of scanning table 114 with IPUs 113A-113F forming an array of the IPUs. Scanning table 114 may be configured to scan along x and y directions indicated by arrows in Fig. 1D. An example IPU (e.g., IPU 113A) may have one or more electrical ports (e.g., port 141) as well as ports for connecting a cooling liquid for cooling IPU 113A. For example, port 143A may be used to flow a cooling liquid into IPU 113A, and port 143B may be used to flow the cooling liquid out of IPU 113A. In an example embodiment, IPU 113A may include a heatsink in contact with the cooling liquid for extracting heat from IPU 113A.

As shown in Fig. 1D, lens assemblies 129A-129E may be associated with respective IPUs 113A-113F. Lens assemblies 129A-129E may include multiple lenses as described above and may focus a light emitted by IPUs over a selected area of the surface of the resin. For example, as shown in Fig. 1D, lens assembly 129E of IPU 113E focuses light to project an image 150, which may be any suitable shape (square, circle, parallelogram, triangle, plus shape, diamond, and the like). In an example embodiment, as shown in Fig. 1D, the shape may include a parallelogram image 150 that may be oriented such that a side of a parallelogram forms an angle with respect to a lateral direction x or y. For example, a side 151 of parallelogram image 150 forms an angle 143 with direction x, as shown in Fig. 1D. Angle 143 may be any suitable angle, and may be configured to allow overlap with other images projected by other IPUs. In an example embodiment, angle 143 may be an irrational number.

Fig. 1E is another view of scanning table 114 with an array of IPUs 163A and 163B. While Fig. 1E shows two rows of IPUs 163A and 163B; more (or fewer) than two rows of IPUs may be used. Additionally, or alternatively, IPUs may be distributed in any suitable way as further discussed below. Fig. 1E also shows element 161 that may be used to connect scanning table 114 to rail 135, as shown in Fig. 1B.

Fig. 1F shows schematically various components of an example IPU 170 for projecting patches of light (e.g., images 150). As described above, an example IPU may have various mirrors and/or optical components to result in images 150 having different shapes and sizes, as shown in Fig. 1F. IPU 170 may include a light emitting source 178 (e.g., one or more light emitting diodes) a reflector 172 for directing light from source 178 towards one or more optical elements (e.g., elements 171 and 173). Reflector 172 may include a parabolic reflector, a curved mirror, a flat mirror, a prism, and the like. Optical element 171 may include a curved mirror, and optical element 173 may include a convex or concave lens. Reflector 172 and optical elements 171 and 173 may convert light from a point source to a beam of light 176. Beam 176 may be projected onto an example DLP chip 174 that can redirect at least a portion of light from beam 176 onto focusing optics 175. Focusing optics 175 may include one or more lenses or mirrors. In various embodiments, as described above, DLP chip 174 may include mirrors for controlling light 177 reflected by DLP chip 174. For example, DLP chip 174 may control a spatial intensity distribution of light 177 using multiple mirrors of DLP chip 174. After light 177 passes through focusing optics 175, light beam 179 may be emitted from IPU 170 and projected over a surface 180, which may be a surface of the resin. While one DLP chip 174 is shown in Fig. 1F, IPU 170 may include multiple DLP chips (with each chip containing millions of mirrors). A mirror of DLP chip may focus light in an area of few square microns, few tens of square microns, of a few hundred square microns). Furthermore, IPU 170 may include light sources of different wavelengths. For instance, Fig. 1G shows two point sources such as sources 178A and 178B (e.g., LED sources) having respective wavelengths $\lambda_1$ and $\lambda_2$. The light from these sources may be reflected from corresponding reflectors 172A and 172B, and impinge on a curved mirror element 171 before being transmitted through concave lens 173 towards DLP chip 174.

Figs. 1H and 1I show illustrative plots of intensities of light for images 193 and 194 generated by light 191 and 192. Image 193 may have a sharp boundary 195, and image 194 may have a diffuse boundary 196. In an example embodiment, the sharpness of a boundary may be characterized by a ratio of a distance B (the distance over which an intensity of light changes from a minimal to a substantially maximum value) to a distance S (the distance characterizing the size of image 194). For example, if the ratio of $B/S$ = 0.1, image 194 may have a sharp boundary, and if ration of $B/S$ = 0.5, image 195 may have a smooth boundary. The ratio of $B/S$ is only one criterion, and any other suitable criteria may be used.

In an example embodiment, image 194 (as shown in Fig. 1I) may have a boundary indicated by line 181, curve 182 or curve 183. A region of an image inside the boundary (e.g., region 184) is defined as an inside region of the image. The image boundary may be a continuous closed curve (e.g., any loops such as boundaries of images 197A-197C, as shown in Fig. 1J) that may divide a surface of resin into an inside region (e.g., region 184, as shown in Fig. 1I) having an intensity of the emitted light being higher than a threshold value and an outside region having the intensity of the emitted light being lower the threshold value, where the threshold value may be any suitable value (e.g., may be five, ten, twenty, and the like percent of a maximum value of intensity 182 of the emitted light). As shown in Fig. 1I, image 194 may have a first boundary defined by curve 182 and a second boundary defined by curve 183.

In an example embodiment, a boundary region (e.g., regions 195 and 196) may be defined as a region over which intensity increases from a small value to a larger value. For instance, a boundary region may be defined as a region over which the difference between the maximum intensity and a minimum intensity is five percent, ten percent, fifteen percent, twenty percent, thirty percent, forty percent, fifty percent, sixty percent, seventy percent, eighty percent, ninety percent, hundred percent, and the like of maximum intensity of radiation within the image. The image may not contain holes (e.g., the intensity of the radiation may not decrease to a sufficiently small value within the image as to indicate that there is an internal boundary region within the image, where the boundary region may be defined as above). In some cases, the intensity of radiation within the image may be 0.01-1000 times higher than the intensity of radiation outside the image boundary.

Fig. 1J shows various images that may be projected by IPUs over a surface of the resin. For example, image 197A is substantially a parallelogram (e.g., sides of image 197A are, within acceptable error, parallel to each other), image 197B is substantially an ellipse, and image 197D is substantially a triangle. In various embodiments, the deviation of an image from a corresponding precise geometric shape may be one to a few tens of percent in any suitable measure.

Fig 1J shows a substantially rectangular image 187A with a vector 186A having a magnitude corresponding to a maximum dimension of image 187A, and a substantially rectangular image 187B with a vector 186B having a magnitude corresponding to a maximum dimension of image 187B. In an example embodiment, image 187A may be defined to be substantially parallel to image 187B if vector 187A is substantially parallel to vector 187B. In some cases, image 187A may be defined to be at an angle to image 187B if vector 187A is positioned at the angle to vector 187B. In some cases, the angle between image 187A and image 187B may be few degrees, few tens of degrees, and the like. Fig. 1J also shows that image 187A and image 187B may have a respective minimum dimension 188A and 188B.

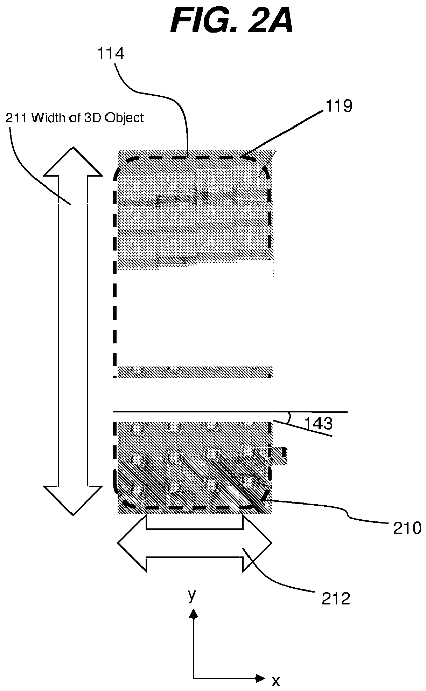

Fig. 2A shows an example embodiment of the plurality of IPUs 119. IPUs 119 may form an array 210 with IPUs 119 arranged to form a grid. For example, Fig. 2A shows IPUs arranged to form a four by eleven grid. As illustrated, IPUs are mounted on scanning table 114 at an angle offset from the axis of the scanning direction (angle 143, as shown in Fig 2A). Angle 143 at which the IPU is offset may be determined by the size of the exposure area, the number of IPUs in the scanning direction and the desired overlap to achieve the desired image fidelity. The angle may be rational or irrational. In an example embodiment, the angle may be a few degrees or a few tens of degrees (e.g., angle 143 may be 13 degrees, 13.28 degrees or have any other suitable value).

The system for additive manufacturing may be configured to be modular and flexible. Individual IPUs may be stand-alone units. When an IPU is damaged or requires maintenance, only that particular IPU may need to be replaced or repaired. Such a modular design can increase uptime and enable more controlled maintenance of system 101. The use of multiple IPU may reduce the amount of magnification required, thereby improving both the resolution and surface quality of printed parts. Improved resolution enables the production of more complicated 3D objects that may include micro-truss or lattice structures. These capabilities enable the production of products for the apparel, automotive and aerospace industries. Fig. 2A shows that scanning table 114 may be configured to have a width 211 (in a *y* direction) corresponding to a width of 3D object and scan in an $x$ direction as indicated by arrow 212.

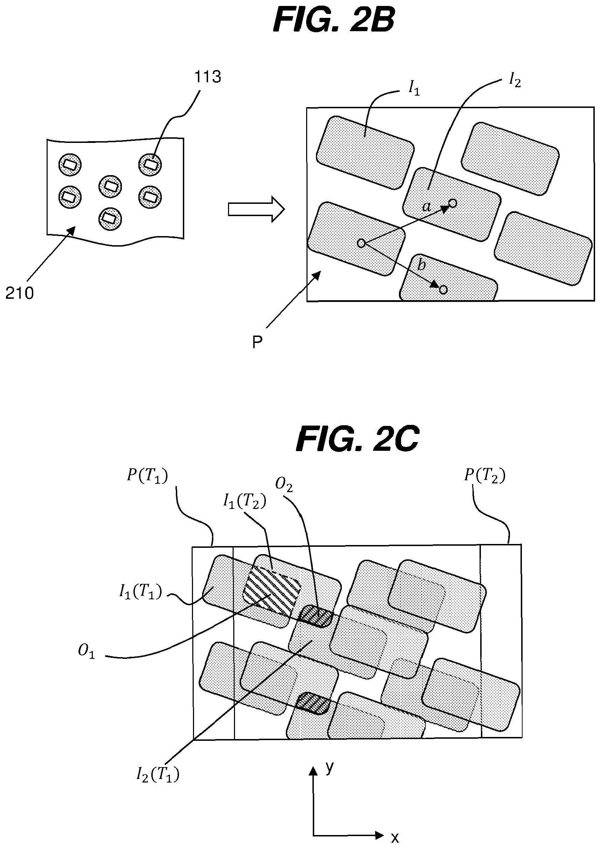

Fig. 2B shows an example array 210 of IPUs 119 that result in light intensity irradiation pattern $P$ over a surface of the resin. Pattern $P$ includes images (e.g., images $I_1$ and $I_2$). The images may form a lattice with characteristic lattice vectors **a** and **b**, as shown in Fig. 2B. Fig. 2C shows an intensity irradiation pattern $P(T_1)$ corresponding to pattern $P$ at a time $T_1$ and a pattern $P(T_2)$ corresponding to pattern $P$ at a time $T_2$. Since scanning table 114 may move laterally (e.g., in a $x$ direction) as shown in Fig. 2A, $P(T_2)$ may shift laterally relative to $P(T_1)$, as shown in Fig. 2C. Image $I_1$ at time $T_1$ (herein denoted as $I_1(T_1)$) may move, and at time $T_2$ it is located at a position indicated by $I_1(T_2)$. As Fig. 2C shows, for sufficiently small time differences $(T_2 - T_1)$, $I_2(T_2)$ may overlap with $I_1(T_1)$, at an overlap location $O_1$. Furthermore, image $I_1(T_2)$ may overlap with a location of another image at a time $T_1$ (e.g., $I_2(T_1)$) as shown by overlap location $O_2$. Since the dose of irradiation depends on overall received intensity of light integrated over time, the dose for a given voxel of resin may depend on various factors during the curing process (e.g., the amount of overlap between images, how quickly scanning table 114 moves in a lateral direction, the intensity of irradiation, the wavelength of the irradiation and the like). Any one of these factors or combinations of thereof may be controlled during a 3D printing process. Overlapping of images when scanning table 114 is moving laterally along the scanning direction can result in boundaries between individual images being blurred or averaged, thereby eliminating problems with stitching. Such an overlap, therefore, can provide smooth surfaces of a printed 3D object.

Another advantage of the overlapping images is that a failure of an individual DLP chip within a given IPU or even group of DLP chips may not significantly affect the part quality. For instance, with multiple IPUs 119, as shown in Fig. 2A, an entire IPU may fail without significantly affecting part quality. Such design of system 101, further when combined with the modular configuration of the plurality of IPUs, allows for maximum system uptime, fewer unscheduled repairs, and longer maintenance intervals, thus increasing production time.

Returning to Fig. 1A, system 101 is configured to irradiate build table 118 using light 116. Build table 118 may reside in a resin bath 112 (also referred to as vat 112). In an example embodiment, before fabricating the first solid layer on the build table 118, build table 118 may be coated with a release layer. The release layer ensures that after fabrication is complete, a printed 3D object lifts from build table 118 without sticking to table 118. In various cases, when a 3D object is complete, system 101 may include a mechanism for removing the 3D object from system 101.

Besides printing a 3D object in vat 112, system 101 may be configured to fabricate coating layers for a substrate. For such configuration, a substrate (e.g., an article of cloth or a wooden, a metal or a plastic shape) may be first placed on build table 118, and the surface of the substrate may be treated (e.g., cleaned using alcohol or other chemical agents) before receiving a layer of resin. In some cases, when the substrate is not smooth, the initial layer of resin may have a variable thickness that may require a variable lateral radiational dose for curing (e.g., at regions where the layer of resin is thicker, a larger radiational dose may be required).

In various embodiments, system 101 may be configured for printing large complex 3D objects and may require the processing of terabits of information per second to produce complex 3D objects (e.g., objects with less than 200 $\mu$m resolution and perhaps even at less than 10 $\mu$m resolution). A DLP chip of IPU 113 may include a large number of mirrors (e.g., between 2 and 10 million mirrors), which actuate at high frequency (e.g., half of a kHz, few kHz, ten kHz, fifteen kHz, and the like). Tens or hundreds of DLP chips may be used for system 101. IPUs 119 may be configured to cure each voxel of photo-resin while moving (e.g., at a speed of up to tens of meters per second) across large baths of resin to distribute photonic energy necessary to cure one voxel using thousands of different mirrors. In various embodiments, sensing systems (e.g., cameras) may be used to provide feedback, as further described below, to enable real-time adjustment to account for local manufacturing conditions (e.g., a temperature, humidity, external radiation at the manufacturing facility, and the like) for improved 3D printing.

A fluid medium (resin) may be deposited on build table 118 using any suitable means (e.g., a pump, sprayer, hose, roller, or nozzle). Alternatively, build table 118 may be movable relative to vat 112, such that when build table 118 is lowered into vat 112, the resin is deposited on its surface. As previously described, after the deposition, the fluid medium may be smoothed with a recoater (e.g., recoater 137)

Vat 112 may contain a resin and optionally a Z-fluid and/or A-fluid. Z-fluid may be denser than the resin (and thus may sink below the resin) and may be immiscible with the resin (and is thus separated from it). The Z-fluid may be configured to displace a portion of resin to reduce the amount of resin needed for a print. The Z-fluid may increase resin refresh rate and decrease resin aging while the resin is residing in vat 112. Further benefits may enable a decrease in the number of supports needed in the print and further lead to a decreased post-processing time of the printed part. Exemplary Z-fluids include aqueous fluids, small molecule alcohol-based fluids (e.g., methanol, ethanol, or propanol), semi-fluorinated fluids, semi-fluorinated polyether fluid, semi-fluorinated silicone-containing polymer fluid, fluorinated polymers, perfluoropolyethers (PFPE), perfluoroalkylethers (PFAE), perfluoropolyalkylethers (PFPAE), or fluorinated oils (e.g., Krytox, Fomblin, and Demnum). Optionally, the Z-fluid may comprise a mixture of perfluorinated fluids, semi-fluorinated fluids, and/or semi-fluorinated silicone containing polymer fluid.

A-fluid may be lighter than the resin and may reside over the resin surface. The A-fluid is inert, has a low viscosity and a low density. The A-Fluid is used to reduce diffusion of gaseous species into or out of the resin. The A-fluid may act as a protective boundary for the resin.

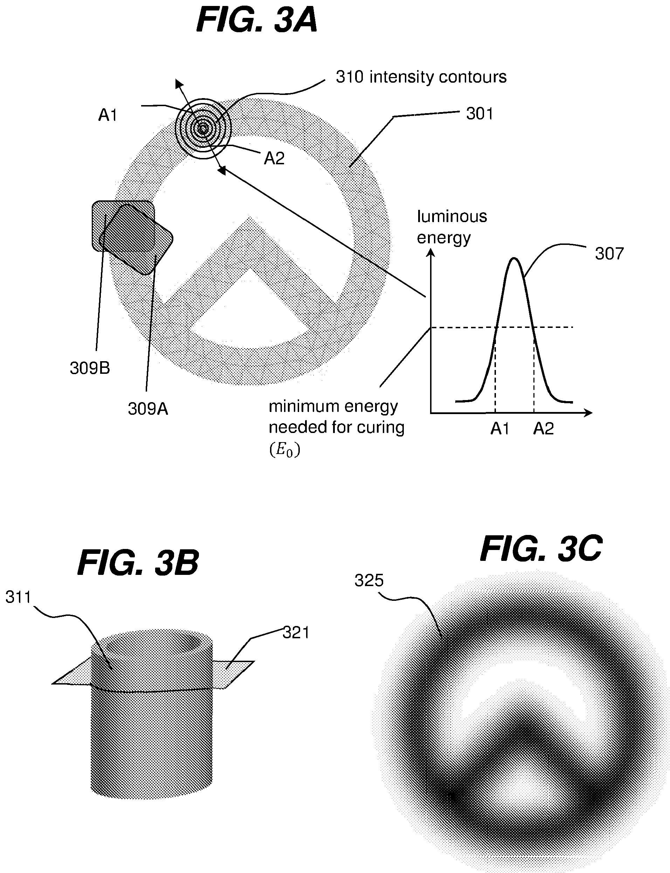

As previously described, IPUs 119, shown in Fig. 2B may be configured to project regions of light in the form of images (e.g., images 309A and 309B, as shown in Fig. 3A). The images may overlap, may coincide with an area requiring irradiation (at least partially), and may have different shapes as described above. In various embodiments, a set of images may be projected over and in the proximity of area 301 requiring irradiation (e.g., as shown by regions 309A and 309B) for a given duration of time (also defined as exposure time) such that resin in area 301 is solidified (i.e., cured). As shown in Fig. 3A images 309A and 309B may overlap resulting in increased exposure to light in overlapping regions. Using multiple overlapping images, the exposure to light may be highest in the region where images overlap for the most time, decreasing towards regions with less overlap. Fig. 3A shows an example exposed circular area 310 with intensity contours where the exposure is maximum in the middle of the area and decreasing towards the edges of the area. Area 301 may be a cross-sectional cut 321 of a 3D object 311, as shown in Fig. 3B that is being irradiated by the light from the image processing units. In various embodiments, system 101 may be configured to provide a luminous energy dose within area 301 that is larger than a threshold dose needed for fluid solidification and to provide a luminous energy dose outside area 301 that is lower than a threshold dose needed for the fluid solidification. For example, at points A1 and A2, shown in Fig. 3A, the dose may be just sufficient for the fluid medium solidification, and the luminous energy dose may be characterized by a Gaussian distribution 307. Fig. 3C shows an example of the luminous energy dose distribution 325 over the area 301 with dark regions characterized by a larger dose.

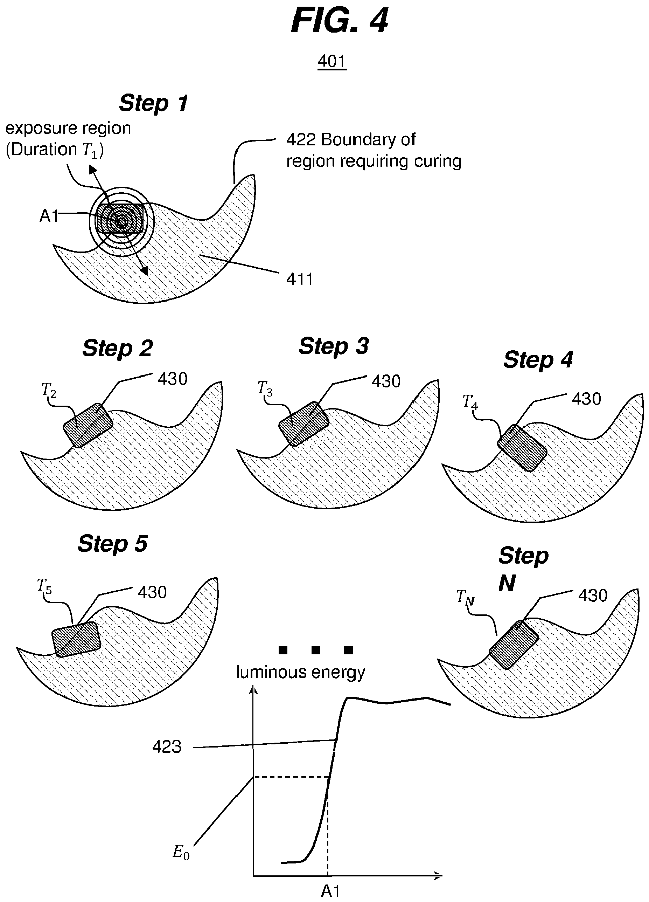

Fig. 4 shows an example process 401 for irradiating a region 411 having a boundary 422. The system for illumination of the fluid medium may illuminate a region within the boundary using multiple images 430 (shown in Fig. 4) positioned and rotated differently for different illumination steps 1-N of process 401. In an example embodiment, at step 1, one or more IPUs of system 101 may illuminate region 401 for a duration of time $T_1$ with image 430 positioned, as shown in step 1. Similarly, at step 2 image 430 may be projected by one or more IPUs for a duration of time $T_2$ with image 430 positioned, as shown in step 2. Illumination step 2 may follow illumination step 1. Various other orientations and durations of times for image 430 are shown in steps 3-N. After completion of irradiation steps 1-N, the energy dose within region 422 may be described by a function 423, as shown in Fig. 4, with $E_0$ - being a minimum dose for solidification of the fluid medium at a point A1 on the boundary.

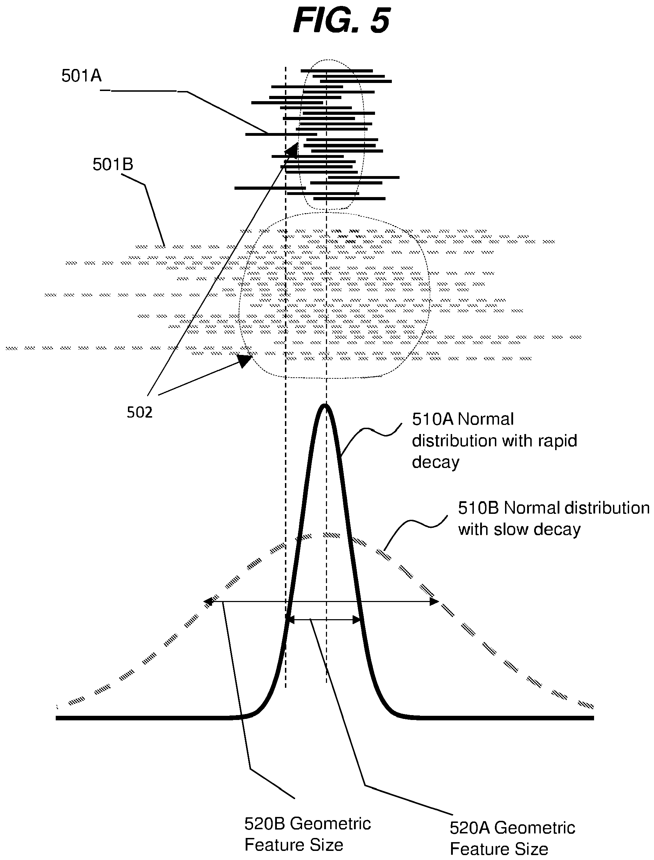

Fig. 5 shows the sizes of images (represented by lines 501A and 501B) with lengths of lines corresponding to a lateral characteristic size for an example image. Multiple exposures of a region to the overlapping images may result in the distribution of the luminous energy dose, as shown by normal distributions with a fast decay shown by distribution 510A and a slow decay shown by distribution 510B. In an example embodiment, fast decay 510A distribution may correspond to irradiation by images 501A and slow decay 510B may correspond to irradiation by images 501B. For accurate resolution near a boundary of an area requiring irradiation, a luminous energy dose with sharp decay may be used, thus requiring images with a small characteristic size. The characteristic size of an image ($L$) may be calculated based on a full width at half maximum (FWHM) (e.g., $L = FWHM$) of Gaussian distribution which is related to standard deviation $\sigma$ as $FWHM = 2.355\sigma$. Thus, given the standard deviation for the Gaussian distribution, the characteristic image for projecting on the boundary may be calculated.

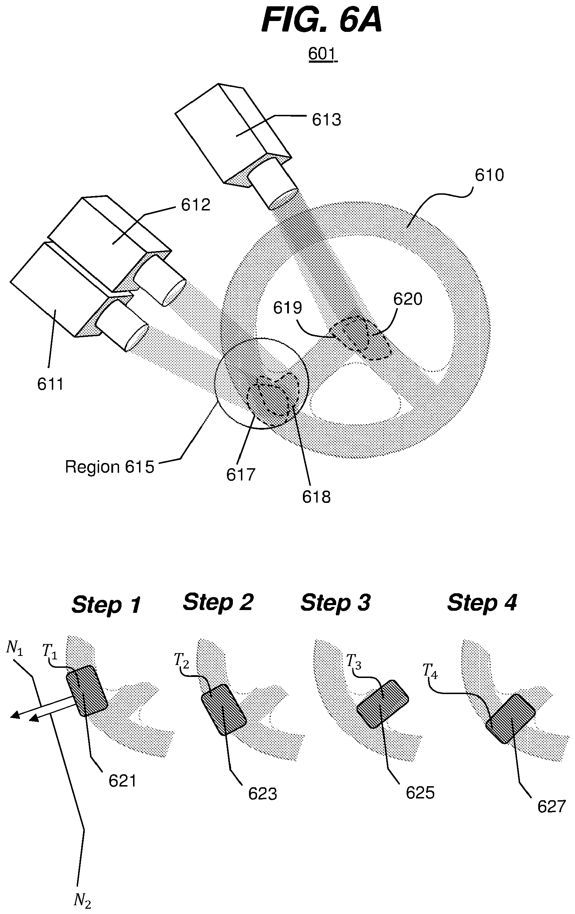

Fig. 6A shows an example embodiment of a process 601 of projecting images (e.g., images 617-620, and images 621-627) onto a cross-sectional area 610 of a 3D object. Fig. 6A shows multiple IPUs (e.g., IPUs 611-613) used to project various images. For example, IPUs 611 and 612 may project overlapping images 617 and 618, and IPU 613 may project an image 619 or an image 620. In an example embodiment, IPU 613 may change shape and/or position of an image (e.g., may change from projecting image 619 to projecting image 620) by changing position of mirrors (e.g., mirrors of DLP chips of IPU 613, or other mirrors that may be present in IPU 613) or position of optical elements (e.g., position of lenses) of IPU 613.

In various embodiments, images projected by various IPUs may be configured to have a shape and orientation to align with cross-sectional area 610. For example, an image formed by IPUs may be oriented (e.g., using mirrors or optical elements) such that the side of the image is aligned with the side of area 610. In an example embodiment, during process 601, images may be projected using several steps (e.g., steps 1-4), as indicated in Fig. 6A. For instance, at step 1 (at time $T_1$) an image 621 (which may be a result of light projected from one or more IPUs) may be aligned with a side of area 610, such that a normal direction vector constructed to the side of the image ($N_1$) may be parallel to the normal direction vector $N_2$ constructed to the boundary of the design area. At step 2 (time $T_2$) a light from IPUs may be projected to a new image 623 that may be at a different location than image 621, and may also be aligned with geometry 610 as shown in Fig. 6A. In an example embodiment, the IPU (e.g., IPU 611) for projecting image 621 may be used to project image 623 by adjusting mirrors or optical elements of IPU 611. Additionally, or alternatively, a different IPU (e.g., IPU 612) may be used to project image 623. At step 3 (time $T_3$) a light from one or more IPUs may be projected to image 625, which, as shown in Fig. 6A may be aligned with a different portion of area 610, and at step 4 (time $T_4$) a light from one or more IPUs may be projected to image 627. While Fig. 6A shows images 621-627 having a characteristic rectangular shape, any suitable shape of images may be used (e.g., circular images, parallelogram images, and the like). Furthermore, the shape and/or size of images can change when light is projected onto different locations of area 610.

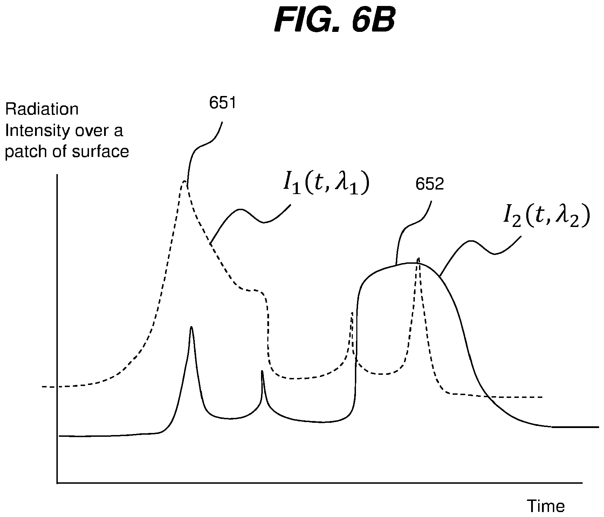

Fig. 6B shows an example distribution of radiational intensity as a function of time over a patch of surface, for an example voxel of resin. For example, graph 651 shows a first distribution of intensity as a function of time $I_1(t, \lambda_1)$ for a light source with a wavelength $\lambda_1$, and graph 652 shows a second distribution of intensity as a function of time $I_2(t, \lambda_2)$ for another light source with a wavelength $\lambda_2$. Both light sources may be part of a single IPU or may be from different IPUs. As shown in Fig. 6B, the intensity of light over a patch of a surface may not be constant in time. For example, system 101 may be configured to deliver pulsed light over the patch of surface allowing the patch of the surface of the resin to partially cure during illumination and between illumination cycles. Distributions $I_1$ and $I_2$ may be determined based on properties or resin being illuminated (e.g., if resin cures after being illuminated for a duration of time $\tau$, pulses of light may be separated by time periods being on the order of $\tau$). In an example embodiment, a first light source may emit a light pulse at a first wavelength followed by a second light source emitting another light pulse at a second wavelength.

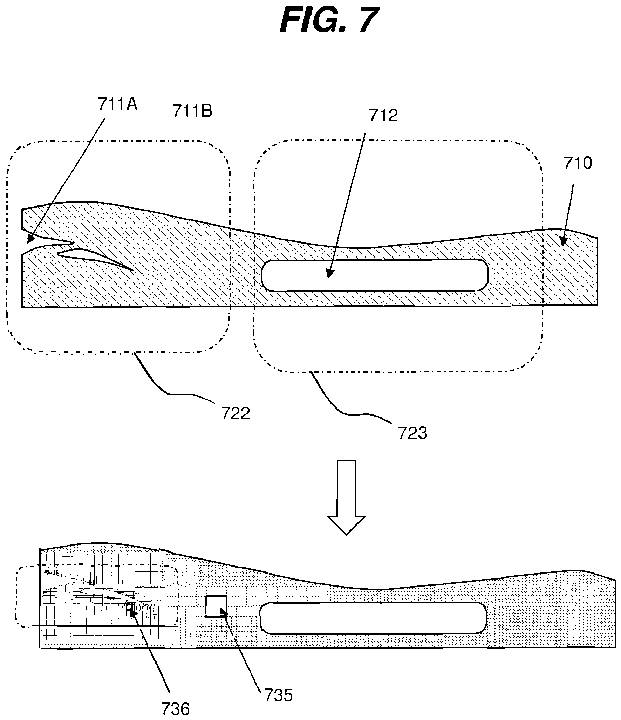

Fig. 7 shows an example cross-sectional top view of a 3D object 710 that may include a region 722 with a large degree of complexity (e.g., a region that has boundaries with many surfaces having rapid variation in curvature). For example, region 722 may include vacancies 711A and 711B. Additionally, 3D object 710 may include a region 723 that has a lower degree of complexity. For example, region 713 may have one large vacancy 712 with surfaces having mostly constant curvature (apart from corners of vacancy 712, surfaces of vacancy 712 have zero curvature). In an example embodiment, geometry 710 may be partitioned using a quadtree into quadtree notes (e.g., square cells, as shown in Fig. 7, also referred to as square regions or voxels). Fig. 7 shows an example of a large voxel 735 and a smaller voxel 736. Smaller voxels may be used to represent the geometry of 3D object 710 in a complex region (e.g., region 722), whereas larger voxels may be used to represent the geometry of object 710 in a less complex region (e.g., region 723). In some cases, voxels may be calculated based on CAD representation of a 3D object prior to the start of a 3D printing process, and in other cases (particularly when 3D object includes complex geometry) voxels may be calculated during the 3D printing process. The voxels may be calculated using any suitable mesh generation algorithm (e.g., Cart 3D Cubes algorithm).

For each voxel, during the 3D printing process, system 101 may be configured to calculate the irradiation dose. For example, large voxels may receive a larger irradiation dose than smaller voxels. To deliver radiational dose to smaller voxels, small-sized images may be projected over smaller voxels, and to deliver radiational dose to larger voxels, larger images may be used. In an example embodiment, image size may be proportional to the size of a voxel being irradiated. In some cases, other parameters (e.g., a wavelength of the light, an amount of overlap of images, intensity as a function of time) may be different for different voxels.

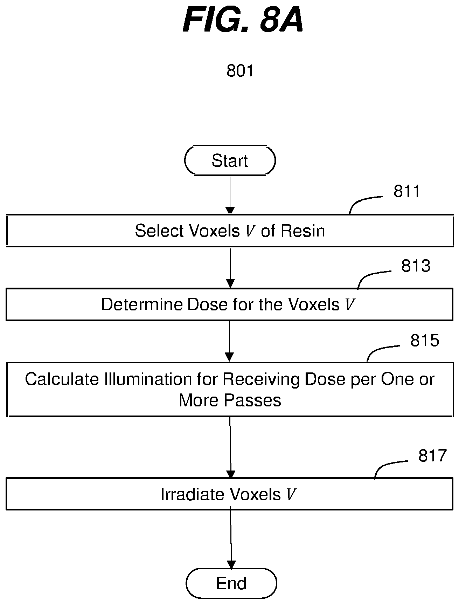

Figs. 8A shows an example process 801 for irradiating a voxel. At step 811 of process 801, one of the many voxels V of a 3D object may be selected for determining irradiation dose for those voxels. In an example embodiment, the selection of voxels V is made by computer system 105 (as shown in Fig. 1A). At step 813, computer system 105 may determine the dose for voxels V as well as a distribution of intensity across any/some/all of voxels V (e.g., computing system may determine that the central portion of a voxel requires higher intensities than portions of the voxel in proximity to the boundary of the voxel). At step 815, computer system 105 may determine illumination from various IPUs as scanning table 114 moves over a surface of resin, such that voxels V receives determined dose of radiation (a dose of radiation may be different from one voxel to another depending, for example, on a size of a voxel) for one or more passes of scanning table 114 over the surface of the resin. As there are a variety of parameters that can be used to control illumination of the surface of the resin, the computer system 105 may be configured to minimize turning a source of radiation on/off for various IPUs as well as minimize movements of optical elements. In an example embodiment, computer system 105 may be configured to control intensity distribution over the surface of resin from an IPU by controlling the position of various mirrors of DLP chips contained in the IPU, and by turning on/off a source of light of the IPU when necessary. At step 817, computing system 105 may send commands to IPUs of scanning table 114 for irradiation of voxels V, and IPUs of scanning table may execute these commands by irradiating surface or resin to deliver required irradiation dose to the voxels.

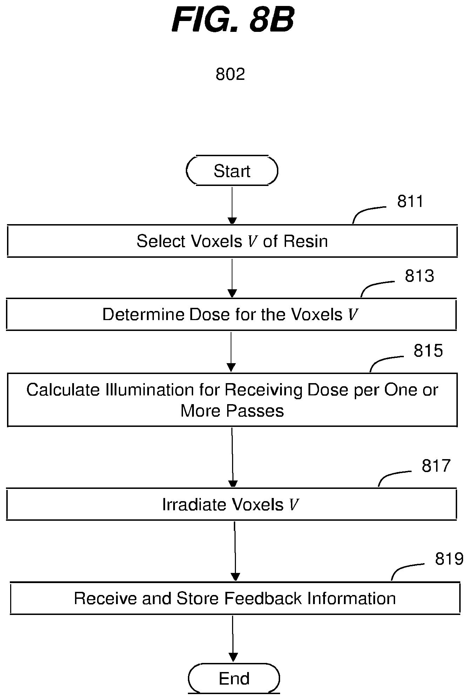

Fig. 8B shows an example process 802, which may include all the steps of process 801 as well as an additional step 819. Additional step 819 may include receiving and storing by computing system 105 feedback information about how well a voxel of resin has been cured. Such information may be obtained using optical means (e.g., by use of visible, UV, or infrared cameras) for detecting light from the cured portion of resin. In some cases, based on feedback information, computer system 105 may be configured to recalculate illumination for the next layer of resin that requires irradiation. For example, if the current layer of resin has one or more voxels that have not been cured, computer system 105 may determine that the next layer of resin may include more voxels that require irradiation. Such determination may be done, for example, when 3D printing a material containing pores. If a layer of resin has pores of larger sizes than previously determined, the next one or more layers may be determined to have smaller sized pores than previously determined by computer system 105. The exact number and size of pores may be calculated based on the functional properties of a region containing pores (e.g., based on thermal conductivity of the region, electrical conductivity, mechanical elasticity, sound transmission, and the like).

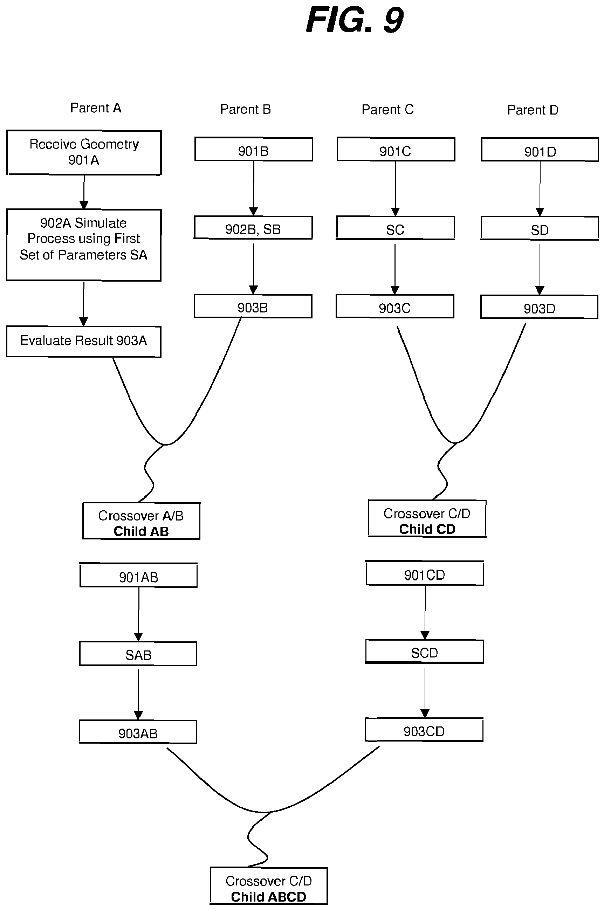

In various embodiments, since the process of fabrication of a 3D object is deterministic, a numerical simulation may be used to identify the best parameters that may be used for the fabrication of the 3D object. For example, the parameters may include the intensity of radiation, positioning of the images formed by IPUs, duration of exposure for the images, shapes of the images, a lateral movement direction of IPUs, a lateral speed of IPUs, etc. In an example embodiment, computer system 105 may receive a 3D geometry and fabricate a virtual 3D object by virtually curing the fluid media using numerical simulation. For example, computer system 105 may select the position and duration of images for exposing the design area to irradiation to deliver the required luminous energy dose to the design area. In an example embodiment, computer system 105 can simulate all of the aspects of the fabrication, including the motion of IPUs, the positioning of the optical elements, and/or the like. Fig. 9 demonstrate an example process labeled Parent A, where computer system 105 receives 3D geometry in step 901A, simulates the process of fabricating the virtual 3D object in step 902A and evaluates result in step 903A. The evaluation of result may include computing a measure function that determines the performance of process Parent A. For example, a first measure function may include calculating a difference between the fabricated virtual 3D object and the 3D geometry. In an example embodiment, such a measure function may include subtracting from the volume of the virtual 3D object the 3D geometry and calculate a total integral of the square of the difference between the volumes of the two geometries. A second measure function may include evaluating time that is required to build the virtual 3D object. A third measure function may include a weighted average of the first and the second measure functions. Examples of measure functions are only illustrative, and other measure functions may be used.

In an example embodiment, multiple simulations may be conducted simultaneously for various sets of parameters (e.g., the set of parameters may be SA for process Parent A). Multiple simulations may be used as a part of a genetic algorithm for optimizing the fabrication of the 3D object. Multiple simulations schematically indicated by processes Parent A-Parent D, with the corresponding parameter sets SA-SD. In an example embodiment, processes that result in adequate measure function may be further combined (e.g., processes Parent A and Parent B may be combined to generate a child process Child AB with parameter set SAB that incorporate some parameters from Parent A and some parameters from Parent B. Similarly, other processes may generate a children processes (e.g., child CD, as shown in Fig. 9). The combination of child processes (e.g., by combining parameters used for each child process to fabricate the three-dimensional objects) may result in subsequent child processes (e.g., child ABCD) having an improved measure function.

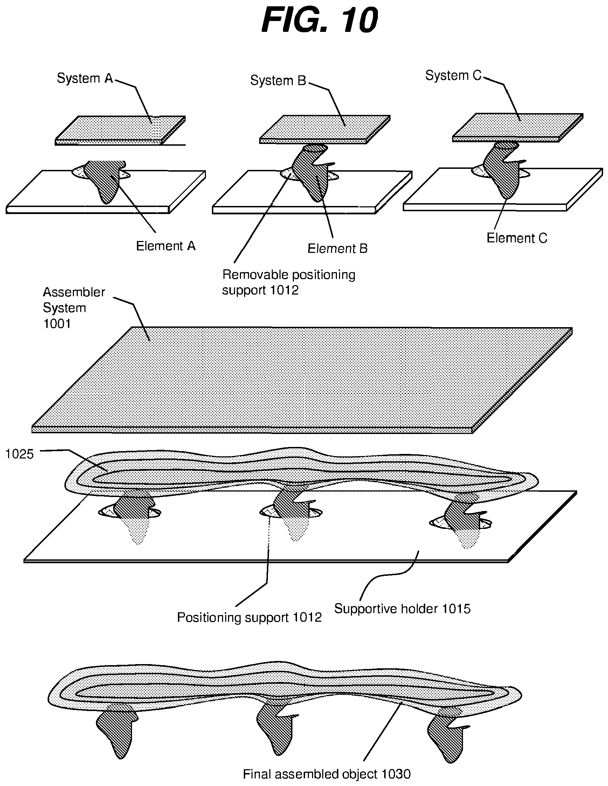

Fig. 10 illustrates that for large 3D objects, 3D elements may be fabricated in parallel using separate systems (e.g., systems A-B). These elements then may be combined using an assembler system 1001. Systems A-B may be any systems for fabricating three-dimensional elements. In some embodiments, these systems may include multiple IPUs, movable IPUs, IPUs with multiple mirror systems, IPUs mounted on a scanning table, and/or the like. In various embodiments, elements A-B fabricated by systems A-B may include removable positioning support regions 1012 that can be used to position elements in a supportive holder 1015. The three-dimensional elements and the supportive holder may be used for the fabrication of an assembled 3D object in an assembly system 1001, as shown in Fig. 10. For example, three-dimensional elements A-B may be attached to a three-dimensional region 1025 fabricated using the assembler system 1001. After the assembled three-dimensional object is complete, support holder 1015 and positioning support regions 1012 may be removed, resulting in assembled object 1030.

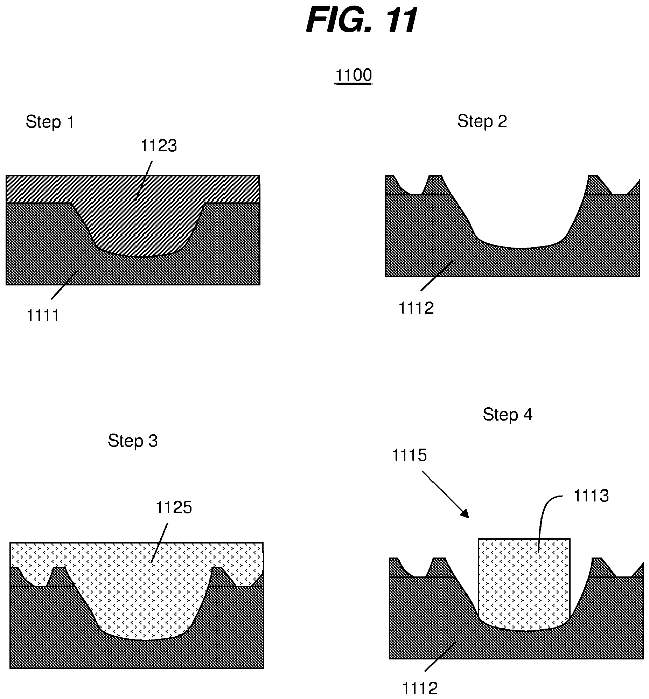

Fig. 11 illustrates an example embodiment of a process 1100 when several different types of resin may be used for fabricating a 3D object composed of different materials (e.g., polymers). At step 1 of process 1100, a 3D object 1111 may be covered with a layer 1123 of a first type of resin. After illuminating resin at step 2, a resulting 3D object 1112 may be formed. At step 3, 3D object 1112 may be covered with a layer 1125 of a second type resin that may be different from the first type resin. After illuminating resin at step 4, a resulting 3D object 1115 may be formed that may have at least one part formed from the first type resin (e.g., part 1112) and at least one part formed from the second type resin (e.g., part 1113). Using multiple types of resins allows 3D objects with complex tailored properties (e.g., tailored thermal, conductive, or mechanical properties). In an example embodiment, the resin of the second type may provide support for the following layers of resin of the first type and may be dissolved after fabrication of a complete 3D object, thus forming cavities within the 3D object.

As described above, computer system 105, as shown in Fig. 1A may include components such as processors, memory devices, input devices, and a database. In some embodiments, system 105 may include multiple core processors to handle concurrently multiple operations. For example, system 105 may include parallel processing units for calculating illumination for each of IPUs 119, as shown in Fig. 1A. One or more processors of computing system 105 (e.g., processors 107, as shown in Fig. 1A) may include one or more known processing devices, such as, but not limited to, microprocessors from the Pentium™ or Xeon™ family manufactured by Intel™, the Turion™ family manufactured by AMD™, or any of various processors from other manufacturers. However, in other embodiments, processors 107 may be a plurality of devices coupled and configured to perform functions consistent with the disclosure. For example, processors 107 may include a plurality of co-processors, each configured to run specific operations such as floating-point arithmetic, graphics, signal processing, string processing, cryptography or I/O interfacing. In some embodiments, processors may include a field-programmable gate array (FPGA), central processing units (CPUs), graphical processing units (GPUs), and the like.

Database 111 may include one or more computing devices configured with appropriate software to perform operations for providing content to server 110. Database 111 may include, for example, Oracle™ database, Sybase™ database, or other relational databases or non-relational databases, such as Hadoop™ sequence files, HBase™, or Cassandra™. In an illustrative embodiment, database 111 may include computing components (e.g., database management system, database server, etc.) configured to receive and process requests for data stored in memory devices of the database and to provide data from the database.

In various embodiments, computer system 105 may include software 110, as shown in Fig. 1A. Software 110 may include a module for processing CAD data and representing 3D geometry using implicit data representations, deep learning networks, and adaptive, hierarchical data structures, which may optimize and accelerate a design life cycle of product development in additive manufacturing. Software 110 may be configured to encode complex information in small file sizes (e.g., less than one megabyte of data for 3D printing that may require ten terabits per second). In some cases, software 110 may be configured to fabricate 3D objects that include micro-truss structures. In an example embodiment, software 110 may not require a designer to manually add each edge, vertex, and topological structure for an example 3D object but instead could use broad sweeping design guidelines and neural networks for determining edges and vertexes of the 3D object. Various details of an example 3D object can be determined by software 110 at a print time or at render time and for the specific resolution of the print. Software 110 may include Adaptive Neural Network Infrastructure™ for designing optimization processing, Adaptive Difference-Field Engine™ for ultra-high-speed rendering and printing, and python wrappers which may enable reactive programming via data flow architectures to facilitate the separation of responsive, adaptive, modern graphical user interface (GUI) design from compute-heavy operations. Software 110 may be configured to recognize multiple Computer Aided Design (CAD) file types including .STL, .WAV, .3MF, .AMF, .DXF, .IGES, .ISFF, and may grow to support file types such as .CGR, .CKD, .CKT, .EASM, .EDRW, .IAM, .IDW, .PAR, .PRT, .SKP, .SLDASM, .SLDDRW, .SLDPRT, .TCT, .WRL, .X_B, .X_T and .XE depending on third party integration and support.

In various embodiments, in order to estimate a dose of energy received by a given voxel of the resin software 110 may use an integral

$$D(t) = \int_{-\infty}^{\infty} S(r)I(t, r)dr$$

with $D(t)$ being a dose delivered at time $t$, $S(r)$ being a unit step function at a location of a voxel) and $I(t, r)$ being an intensity distribution as a function of time t and space $r$ ($r = \{x, y\}$). The total dose may be calculated by integrating dose

$$Total\ Dose = \int_0^{T_p} D(t)dt$$

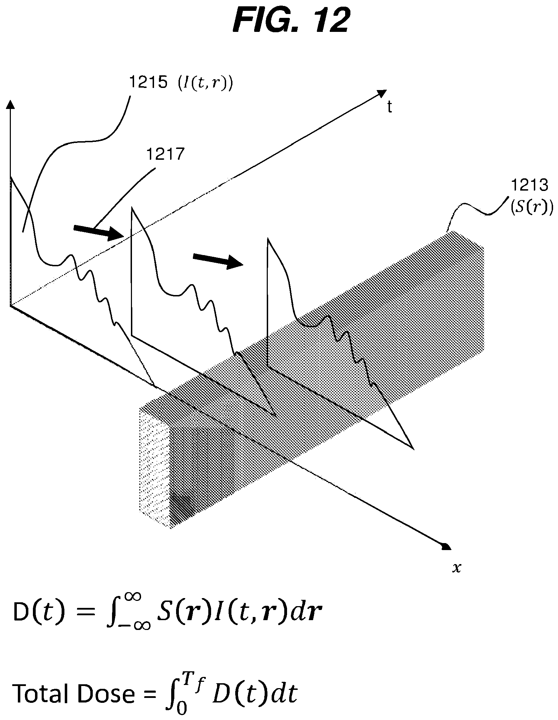

, over an appropriate time interval $T_p$ which, for example, may be a time required for scanning table 114 to make one pass over a surface of the resin. Fig. 12 shows an example step function $S(r)$ labeled 1213 and an example $I(t = t_0, r)$ labeled 1215. Fig. 12 shows arrows 1217 representing a motion of intensity $I$ with time.

It is to be understood that the configuration and the functionality of components of system 101 have been defined herein for the convenience of the description. Alternative configurations can be defined as long as the specified functions and relationships thereof are appropriately performed. Alternatives (including equivalents, extensions, variations, deviations, etc., of those described herein) will be apparent. Such alternatives fall within the scope and spirit of the disclosed embodiments.

The foregoing description has been presented for purposes of illustration. It is not exhaustive and is not limited to precise forms or embodiments disclosed. Modifications and adaptations of the embodiments will be apparent from a consideration of the specification and practice of the disclosed embodiments. For example, while certain components have been described as being coupled to one another, such components may be integrated with one another or distributed in any suitable fashion.

Moreover, while illustrative embodiments have been described herein, the scope includes any and all embodiments having equivalent elements, modifications, omissions, combinations (e.g., of aspects across various embodiments), adaptations and/or alterations based on the present disclosure. The elements in the claims are to be interpreted broadly based on the language employed in the claims and not limited to examples described in the present specification or during the prosecution of the application; such examples are to be construed as nonexclusive. Further, the steps of the disclosed methods can be modified in any manner, including reordering steps and/or inserting or deleting steps.

The features and advantages of the disclosure are apparent from the detailed specification, and thus, it is intended that the appended claims cover all systems and methods falling within the true spirit and scope of the disclosure. As used herein, the indefinite articles "a" and "an" mean "one or more." Similarly, the use of a plural term does not necessarily denote a plurality unless it is unambiguous in the given context. Words such as "and" or "or" mean "and/or" unless specifically directed otherwise. Further, since numerous modifications and variations will readily occur from studying the present disclosure, it is not desired to limit the disclosure to the exact construction and operation illustrated and described, and accordingly, all suitable modifications and equivalents which may be resorted to fall within the scope of the disclosure.

Other embodiments will be apparent from a consideration of the specification and practice of the embodiments disclosed herein. It is intended that the specification and examples be considered as an example only, with a true scope and spirit of the disclosed embodiments being indicated by the following claims.

Embodiments

1. A system for producing a three-dimensional object from a fluid medium configured to solidify when subjected to prescribed light stimulation, the system comprising a plurality of image processing units, each of the plurality of image processing units comprising: at least one light emitting source configured to emit light;

at least one mirror system for reflecting light emitted by the at least one light emitting source, wherein the at least one mirror system comprises a manipulating system for adjusting a direction of the emitted light and a control system for controlling the manipulating system; and

at least one optical element configured to manipulate the emitted light and to project the emitted light onto an area of a surface of the fluid medium to form an image on the surface,

wherein the plurality of image processing units are configured to form a corresponding plurality of images on the surface, and

wherein the plurality of image processing units are configured to be movable at least in a lateral direction relative to the surface.

2. The system of Embodiment 1, wherein each of the plurality of images overlaps with at least one other of the plurality of images.

3. The system of Embodiment 1, wherein the system is configured such that at least one region on the surface of the fluid medium receives emitted light from at least two image processing units.

4. The system of Embodiment 1, wherein the at least one optical element comprises one of a lens, a diffraction grating, a prism, an aperture of a selected shape, a graded index of refraction lens, a mirror, a parabolic reflected a total internal reflection lens, a movable lens, a shape deforming lens, an optical element containing fluid, a wavelength filter, and a wavelength selective absorber.

5. The system of Embodiment 4, wherein the selected shape includes a substantially rectangular or substantially circular shape.

6. The system of Embodiment 1, further including a build table configured to:

support a three-dimensional object; and
move such that the fluid medium can extend over a top portion of the three-dimensional object.

7. The system of Embodiment 6, further comprising a recoater configured to smooth a film formed over the top portion of the three-dimensional object and to adjust a thickness of the film.

8. The system of Embodiment 1, wherein the at least one light emitting source included in each of the plurality of image processing units is configured to emit light at a wavelength in a range of 250-480 nm.

9. The system of Embodiment 1, wherein each of the plurality of image processing units comprises a plurality of light emitting sources, wherein at least one of the plurality of light emitting sources is configured to emit light at a first wavelength, and at least another of the plurality of light emitting sources is configured to emit light at a second wavelength different from the first wavelength.

10. The system of Embodiment 9, wherein the at least one optical element included in each of the plurality of image processing units includes a first optical element configured to manipulate light emitted at the first wavelength and a second optical element configured to manipulate light emitted at the second wavelength.

11. The system of Embodiment 1, wherein the at least one light emitting source included in each of the plurality of image processing units is configured to emit a light pulse at a first wavelength followed by another light pulse at a second wavelength different from the first wavelength.

12. The system of Embodiment 1, wherein a shape associated with at least one of the plurality of images is different from a shape associated with at least another one of the plurality of images.

13. The system of Embodiment 1, wherein the at least one mirror system is configured to cause an intensity of the light emitted from one or more of the light emitting sources to vary over time.

14. The system of Embodiment 1, wherein the at least one mirror system is configured to cause an intensity of the light emitted from one or more of the light emitting sources to vary spatially relative to the surface of the fluid medium.

15. The system of Embodiment 1, wherein the plurality of image processing units are arranged in a grid pattern relative to a scanning table.

16. The system of Embodiment 1, wherein each of the plurality of images includes at least one image boundary, wherein the at least one image boundary is defined by a threshold emitted light intensity level, wherein an intensity level on a first side of the at least one boundary is lower than an intensity level on a second side of the at least one boundary opposite to the first side of the at least one boundary.

17. The system of Embodiment 16, wherein the intensity level on the first side is less than ten percent of maximum intensity of the emitted light used to form an image from among the plurality of images.

18. The system of Embodiment 16, wherein the image is defined by only one image boundary.

19. The system of Embodiment 16, wherein the plurality of image processing units are configured to be movable in a lateral direction relative to the surface by at least a predetermined lateral distance step, and wherein a ratio of the lateral distance step to an average size of the plurality of images is an irrational number.

20. The system of Embodiment 16, wherein the plurality of image processing units are configured to be movable in a lateral direction relative to the surface by at least a predetermined lateral distance step, and wherein a ratio of the lateral distance step to an average size of the plurality of images is a predetermined value.

21. The system of Embodiment 19, wherein the size of an image from the plurality of images is defined by at least one of a square root of an area of the inside region, a length of the image boundary, or a maximum dimension of an image.

22. The system of Embodiment 15, wherein a first image is projected substantially parallel to a second image, wherein the first and the second image are selected from the plurality of images.

23. The system of Embodiment 15, wherein a first image is projected at an angle to a second image, wherein the angle is in a range of few degrees to few tens of degrees, and wherein the first and the second image are selected from the plurality of images.

24. The system of Embodiment 1, further comprising a computer system configured to:

irradiate a region of the surface of the fluid medium according to a pattern to form a three-dimensional object; and
deliver to the region, via the emitted light, an amount of energy sufficient to cause solidification of the fluid medium.

25. The system of Embodiment 24, wherein the computer system is configured to:
partition the region using a quadtree having quadtree nodes, the nodes corresponding to square regions;
for each square region, projecting an image from the plurality of images, the image having an area size similar to the size of an area of the square region;

26. The system of Embodiment 24, wherein each image from the plurality of images has a substantially rectangular shape.

27. The system of Embodiment 26, wherein the computer system is configured to:
orient at least one image selected from the plurality of images, to align the side of the at least one image with the boundary of the region.

28. The system of Embodiment 24, wherein the plurality of image processing units are mounted onto a moving scanning table having a lateral scanning table size, and wherein a speed of a motion of the scanning table and an intensity of the light emitted by the plurality of image processing units is selected such that the selected region receives an amount of via the emitted light that supersedes an amount of energy required to cause solidification of the fluid medium during a single pass of the scanning table over the region.

29. The system of Embodiment 1, wherein the fluid medium includes more than one constituent configured to solidify when subjected to light.

**Claims**

1. A system for producing a three- dimensional object from a fluid medium configured to solidify when subjected to prescribed light stimulation, the system comprising a plurality of image processing units (119), each of the plurality of image processing units comprising:

   at least one light emitting source configured to emit light;
   at least one mirror system for reflecting light emitted by the at least one light emitting source, wherein the at least one mirror system comprises a manipulating system for adjusting a direction of the emitted light and a control system for controlling the manipulating system; and
   at least one optical element configured to manipulate the emitted light and to project the emitted light onto an area of a surface of the fluid medium to form an image on the surface,
   wherein the plurality of image processing units are configured to form a corresponding plurality of images on the surface,
   wherein the plurality of image processing units are arranged in a grid pattern a scanning table (114), wherein the scanning table (114) is configured to be movable in a scanning direction that is in a lateral direction relative to the surface, and
   wherein the image processing units are mounted at an angle (143) offset from the axis of the scanning direction.

2. The system of claim 1, wherein the angle is a rational angle.

3. The system of claim 1, wherein the angle is an irrational angle.

4. The system of claim 1, wherein the angle is 13 degrees or 13.28 degrees.

5. The system of claim 1, wherein each of the plurality of images overlaps with at least one other of the plurality of images.

6. The system of claim 1, wherein the system is configured such that at least one region on the surface of the fluid medium receives emitted light from at least two image processing units.

7. The system of claim 1, wherein the at least one optical element comprises one of a lens, a diffraction grating, a prism, an aperture of a selected shape, optionally wherein the selected shape includes a substantially rectangular or substantially circular shape, a graded index of refraction lens, a mirror, a parabolic reflected a total internal reflection lens, a movable lens, a shape deforming lens, an optical element containing fluid, a wavelength filter, and a wavelength selective absorber.

8. The system of claim 1, further including a build table configured to:

   support a three- dimensional object; and
   move such that the fluid medium can extend over a top portion of the three- dimensional object, optionally further comprising a recoater configured to smooth a film formed over the top portion of the three- dimensional object and to adjust a thickness of the film.

9. The system of claim 1, wherein the at least one light emitting source included in each of the plurality of image processing units is configured to emit light at a wavelength in a range of 250-480 nm.

10. The system of claim 1, wherein each of the plurality of image processing units comprises a plurality of light emitting sources, wherein at least one of the plurality of light emitting sources is configured to emit light at a first wavelength, and at least another of the plurality of light emitting sources is configured to emit light at a second wavelength different from the first wavelength, optionally wherein the at least one optical element included in each of the plurality of image processing units includes a first optical element configured to manipulate light emitted at the first wavelength and a second optical element configured to manipulate light emitted at the second wavelength.

11. The system of claim 1, wherein the at least one light emitting source included in each of the plurality of image processing units is configured to emit a light pulse at a first wavelength followed by another light pulse at a second wavelength different from the first wavelength.

12. The system of claim 1, wherein a shape associated with at least one of the plurality of images is different from a shape associated with at least another one of the plurality of images.

13. The system of claim 1, wherein the at least one mirror system is configured to cause an intensity of the light emitted from one or more of the light emitting sources to vary over time, or wherein the at least one mirror system is configured to cause an intensity of the light emitted from one or more of the light emitting sources to vary spatially relative to the surface of the fluid medium.

14. The system of claim 1, wherein each of the plurality of images includes at least one image boundary, wherein the at least one image boundary is defined by a threshold emitted light intensity level, wherein an intensity level on a first side of the at least one boundary is lower than an intensity level on a second side of the at least one boundary opposite to the first side of the at least one boundary, optionally wherein

(a) the intensity level on the first side is less than ten percent of maximum intensity of the emitted light used to form an image from among the plurality of images;
(b) the image is defined by only one image boundary;
(c) the plurality of image processing units are configured to be movable in a lateral direction relative to the surface by at least a predetermined lateral distance step, and wherein a ratio of the lateral distance step to an average size of the plurality of images is an irrational number, optionally wherein the size of an image from the plurality of images is defined by at least one of a square root of an area of the inside region, a length of the image boundary, or a maximum dimension of an image; or
(d) the plurality of image processing units are configured to be movable in a lateral direction relative to the surface by at least a predetermined lateral distance step, and wherein a ratio of the lateral distance step to an average size of the plurality of images is a predetermined value.

15. The system of claim 1, further comprising a computer system configured to:

irradiate a region of the surface of the fluid medium according to a pattern to form a three -dimensional object; and
deliver to the region, via the emitted light, an amount of energy sufficient to cause solidification of the fluid medium, optionally wherein

(a) the computer system is configured to:

partition the region using a quadtree having quadtree nodes, the nodes corresponding to square regions;
for each square region, projecting an image from the plurality of images, the image having an area size similar to the size of an area of the square region; or

(b) each image from the plurality of images has a substantially rectangular shape, and wherein the computer system is configured to:
orient at least one image selected from the plurality of images, to align the side of the at least one image with the boundary of the region.

16. The system of claim 1, wherein the fluid medium includes more than one constituent configured to solidify when subjected to light.

17. A process for irradiating a voxel in a 3D printing system, wherein the system comprises a computer system (105), a plurality of image processing units arranged in a grid pattern relative to a scanning table (114), and a resin, comprising steps of:

(a) selecting voxels $V$ of resin;
(b) determining an irradiation dose for the voxels $V$;
(c) calculating illumination such that the voxels $V$ receive the determined irradiation dose over one or more passes of the scanning table over the surface of the resin; and
(d) irradiating the voxels $V$ over the one or more passes utilizing the calculated illumination.

18. A process according to claim 17, wherein step (b) additionally includes determining a distribution of intensity across any, some or all of the voxels $V$.

19. A process according to claim 17, comprising an additional step of:
(e) receiving and storing feedback information about how well a voxel of resin has been cured.

20. A process according to any one of claims 17 to 19, wherein in step (c) the illumination is calculated such that the voxels $V$ receive the determined irradiation dose more than one pass of the scanning table over the surface of the resin; and in step (d) the voxels $V$ are irradiated over the more than one pass utilizing the calculated illumination.

21. A system for producing a three- dimensional object from a fluid medium configured to solidify when subjected to prescribed light stimulation, the system comprising a plurality of image processing units, each of the plurality of image processing units comprising:

at least one light emitting source configured to emit light;
at least one mirror system for reflecting light emitted by the at least one light emitting source, wherein the at least one mirror system comprises a manipulating system for adjusting a direction of the emitted light and a control system for controlling the manipulating system;
at least one optical element configured to manipulate the emitted light and to project the emitted light onto an area of a surface of the fluid medium to form an image on the surface;
a computer system configured to:

irradiate a region of the surface of the fluid medium according to a pattern to form a three- dimensional object; and
deliver to the region, via the emitted light, an amount of energy sufficient to cause solidification of the fluid medium;
wherein the plurality of image processing units are configured to form a corresponding plurality of images on the surface,
wherein the plurality of image processing units are configured to be movable at least in a lateral direction relative to the surface, and
wherein the plurality of image processing units are mounted onto a moving scanning table having a lateral scanning table size, and wherein a speed of a motion of the scanning table and an intensity of the light emitted by the plurality of image processing units is selected such that the selected region receives an amount of energy via the emitted light that supersedes an amount of energy required to cause solidification of the fluid medium during a single pass of the scanning table over the region.

# FIG. 1A

<u>101</u>

105

107

106

111

108

109

110

113

115A

114

115B

119

DLP LightBar™

118

116

Build Table

Build Table

Dual Direction Scanning

Resin Bath

112

# FIG. 1B

101

# FIG. 1C

# FIG. 1D

# FIG. 1E

114

# FIG. 1F

178

IPU 170

172

171

174

175

173

179 Light beam

177

176

Images 150

180

# FIG. 1G

# FIG. 1H

# FIG. 1I

# FIG. 1J

197A

197B

197C

188A

187A

186A

188B

187B

186B

# FIG. 1K

# FIG. 2A

211 Width of 3D Object

114

119

143

210

212

y

x

# FIG. 2B

# FIG. 2C

# FIG. 3A

310 intensity contours

A1

301

A2

luminous
energy

307

309B

309A

minimum energy
needed for curing
$(E_0)$

A1    A2

# FIG. 3B

311

321

# FIG. 3C

325

# FIG. 4

401

## Step 1

exposure region
(Duration $T_1$)

422 Boundary of
region requiring curing

A1

411

## Step 2

$T_2$

430

## Step 3

$T_3$

430

## Step 4

$T_4$

430

## Step 5

$T_5$

430

## Step N

$T_N$

430

■ ■ ■

luminous energy

423

$E_0$

A1

# FIG. 5

501A

501B

502

510A Normal
distribution with rapid
decay

510B Normal distribution
with slow decay

520B Geometric
Feature Size

520A Geometric
Feature Size

# FIG. 6A

601

Region 615

Step 1    Step 2    Step 3    Step 4

$N_1$ $T_1$

$N_2$

621    623    625    627

# FIG. 6B

Radiation
Intensity over a
patch of surface

651

$I_1(t, \lambda_1)$

652

$I_2(t, \lambda_2)$

Time

# FIG. 7

# FIG. 8A

801

```
          ( Start )
              |
              v                          — 811
  +-------------------------------------+
  |        Select Voxels V of Resin     |
  +-------------------------------------+
              |
              v                          — 813
  +-------------------------------------+
  |       Determine Dose for the Voxels V |
  +-------------------------------------+
              |
              v                          — 815
  +-------------------------------------+
  | Calculate Illumination for Receiving Dose per One or |
  |                 More Passes         |
  +-------------------------------------+
              |
              v                          — 817
  +-------------------------------------+
  |           Irradiate Voxels V        |
  +-------------------------------------+
              |
              v
           ( End )
```

# FIG. 8B

802

```
           ┌──────────┐
           (   Start   )
           └──────────┘
                │
                │                    ─ 811
                ▼
┌─────────────────────────────────────────┐
│          Select Voxels V of Resin         │
└─────────────────────────────────────────┘
                │
                │                    ─ 813
                ▼
┌─────────────────────────────────────────┐
│        Determine Dose for the Voxels V    │
└─────────────────────────────────────────┘
                │
                │                    ─ 815
                ▼
┌─────────────────────────────────────────┐
│  Calculate Illumination for Receiving     │
│         Dose per One or More Passes        │
└─────────────────────────────────────────┘
                │
                │                    ─ 817
                ▼
┌─────────────────────────────────────────┐
│             Irradiate Voxels V            │
└─────────────────────────────────────────┘
                │
                │                    ─ 819
                ▼
┌─────────────────────────────────────────┐
│     Receive and Store Feedback Information │
└─────────────────────────────────────────┘
                │
                ▼
           ┌──────────┐
           (    End    )
           └──────────┘
```

# FIG. 9

| Parent A | Parent B | Parent C | Parent D |
|---|---|---|---|

```
┌─────────────────┐   ┌─────────────┐   ┌─────────────┐   ┌─────────────┐
│ Receive Geometry│   │    901B     │   │    901C     │   │    901D     │
│      901A       │   └─────────────┘   └─────────────┘   └─────────────┘
└─────────────────┘          │                 │                 │
         │                   ▼                 ▼                 ▼
┌─────────────────┐   ┌─────────────┐   ┌─────────────┐   ┌─────────────┐
│  902A Simulate  │   │  902B, SB   │   │     SC      │   │     SD      │
│ Process using   │   └─────────────┘   └─────────────┘   └─────────────┘
│ First Set of    │          │                 │                 │
│ Parameters SA   │          ▼                 ▼                 ▼
└─────────────────┘   ┌─────────────┐   ┌─────────────┐   ┌─────────────┐
         │            │    903B     │   │    903C     │   │    903D     │
         ▼            └─────────────┘   └─────────────┘   └─────────────┘
┌─────────────────┐
│Evaluate Result  │
│      903A       │
└─────────────────┘
```

Crossover A/B
**Child AB**

Crossover C/D
**Child CD**

```
┌─────────────┐              ┌─────────────┐
│   901AB     │              │   901CD     │
└─────────────┘              └─────────────┘
      │                            │
      ▼                            ▼
┌─────────────┐              ┌─────────────┐
│    SAB      │              │    SCD      │
└─────────────┘              └─────────────┘
      │                            │
      ▼                            ▼
┌─────────────┐              ┌─────────────┐
│   903AB     │              │   903CD     │
└─────────────┘              └─────────────┘
```

Crossover C/D
**Child ABCD**

# FIG. 10

System A

System B

System C

Element A

Element B

Element C

Removable positioning
support 1012

Assembler
System
1001

1025

Positioning support 1012

Supportive holder 1015

Final assembled object 1030

# FIG. 11

<u>1100</u>

Step 1

1123

1111

Step 2

1112

Step 3

1125

Step 4

1115

1113

1112

## *FIG. 12*

$$D(t) = \int_{-\infty}^{\infty} S(r)I(t,r)dr$$

$$\text{Total Dose} = \int_{0}^{T_f} D(t)dt$$

**REFERENCES CITED IN THE DESCRIPTION**

**Patent documents cited in the description**

- US 62796545